# EUROPEAN PATENT APPLICATION

(11) **EP 4 694 272 A1**
(43) Date of publication of application: **11.02.2026**
(21) Application number: 23932009.6
(22) Date of filing: 05.04.2023
(51) Int. Cl.: H04W 16/28, H04W 72/232

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN)
(74) Representative: Hoffmann Eitle
(86) International application number: PCT/JP2023/014121
(87) International publication number: WO 2024/209598

(57) **Abstract**

A terminal according to one aspect of the present disclosure includes a receiving section that receives downlink control information (DCI) for scheduling a physical uplink shared channel (PUSCH), and a control section that determines, based on a specific field included in the DCI, whether the PUSCH is a plurality of PUSCHs to be transmitted in at least a same time domain subjected to space division multiplexing or a PUSCH for a single transmission/reception point. According to one aspect of the present disclosure, it is possible to appropriately perform UL transmission using a plurality of panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, a UE may be able to use one of a plurality of panels (or a plurality of beams) for uplink (UL) transmission. In Rel. 18 and later versions, in order to improve UL throughput/reliability, support of simultaneous multi-panel transmission using a plurality of panels (Simultaneous Transmission across Multiple Panels (STxMP)) to one or more transmission/reception points (TRP) is under study.

However, in the case where such UL transmission using a plurality of panels (for example, simultaneous UL transmission) is supported, there has been no sufficient study on how to control the UL transmission. If UL transmission using a plurality of panels is not performed properly, system performance may be degraded, such as throughput reduced.

Therefore, an object of the present disclosure is to provide a terminal, a radio communication method, and a base station that can appropriately control UL transmission even for UL transmission using a plurality of panels.

### Solution to Problem

A terminal according to one aspect of the present disclosure includes a receiving section that receives downlink control information (DCI) for scheduling a physical uplink shared channel (PUSCH), and a control section that determines, based on a specific field included in the DCI, whether the PUSCH is a plurality of PUSCHs to be transmitted in at least a same time domain subjected to space division multiplexing or a PUSCH for a single transmission/reception point.

### Advantageous Effects of Invention

According to one aspect of the present disclosure, it is possible to appropriately perform UL transmission using a plurality of panels.

### Brief Description of Drawings

[FIG. 1] FIGS. 1A and 1B show examples of a unified/common TCI framework.
[FIG. 2] FIGS. 2A and 2B show examples of DCI-based TCI state indication.
[FIG. 3] FIG. 3 is a diagram to show an example of association between a precoder type and a TPMI index.
[FIG. 4] FIGS. 4A and 4B are diagrams to show examples of single-panel UL transmission.
[FIG. 5] FIGS. 5A to 5C are diagrams to show examples of schemes 1 to 3 of simultaneous UL transmission using multi-panel.
[FIG. 6] FIGS. 6A to 6C are diagrams to show examples of PUSCH transmission schemes.
[FIG. 7] FIGS. 7A to 7C are diagrams to show other examples of PUSCH transmission schemes.
[FIG. 8] FIG. 8 is a diagram to show an example of simultaneous UL transmission using multi-panel.
[FIG. 9] FIG. 9 is a diagram to show an example of simultaneous PUSCH and PUCCH transmission.
[FIG. 10] FIG. 10 is a diagram to show an example of PUCCH cell switching scheme 1.
[FIG. 11] FIG. 11 is a diagram to show an example of PUCCH cell switching scheme 2.
[FIG. 12] FIG. 12 is a diagram to show another example of PUCCH cell switching scheme 2.
[FIG. 13] FIGS. 13A to 13D are diagrams to show examples of an STxMP scheme.
[FIG. 14] FIG. 14 is a diagram to show an example of the maximum number of layers.
[FIG. 15] FIG. 15 is a diagram to show an example of application of an indicated TCI state according to a first embodiment.
[FIG. 16] FIG. 16 is a diagram to show an example of association between an indicated TCI state, an SRS resource set, and a layer, according to Option 1-3-1-1.
[FIG. 17] FIG. 17 is a diagram to show an example of association between an indicated TCI state, an SRS resource set, and a layer, according to Option 1-3-2-1.
[FIG. 18] FIG. 18 is a diagram to show an example of application of an indicated TCI state according to a second embodiment.
[FIG. 19] FIG. 19 is a diagram to show an example of association between an indicated TCI state, an SRS resource set, and a layer, according to Option 2-2-1-1.
[FIG. 20] FIG. 20 is a diagram to show an example of association between an indicated TCI state, an SRS resource set, and a layer, according to Embodiment 2-2-2.
[FIG. 21] FIG. 21 is a diagram to show an example of PUCCH transmission according to Embodiment 3-2.
[FIG. 22] FIG. 22 is a diagram to show an example of a schematic structure of a radio communication system according to one embodiment.
[FIG. 23] FIG. 23 is a diagram to show an example of a structure of a base station according to one embodiment.
[FIG. 24] FIG. 24 is a diagram to show an example of a structure of a user terminal according to one embodiment.
[FIG. 25] FIG. 25 is a diagram to show an example of a hardware structure of the base station and the user terminal according to one embodiment.
[FIG. 26] FIG. 26 is a diagram to show an example of a vehicle according to one embodiment.

### Description of Embodiments

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

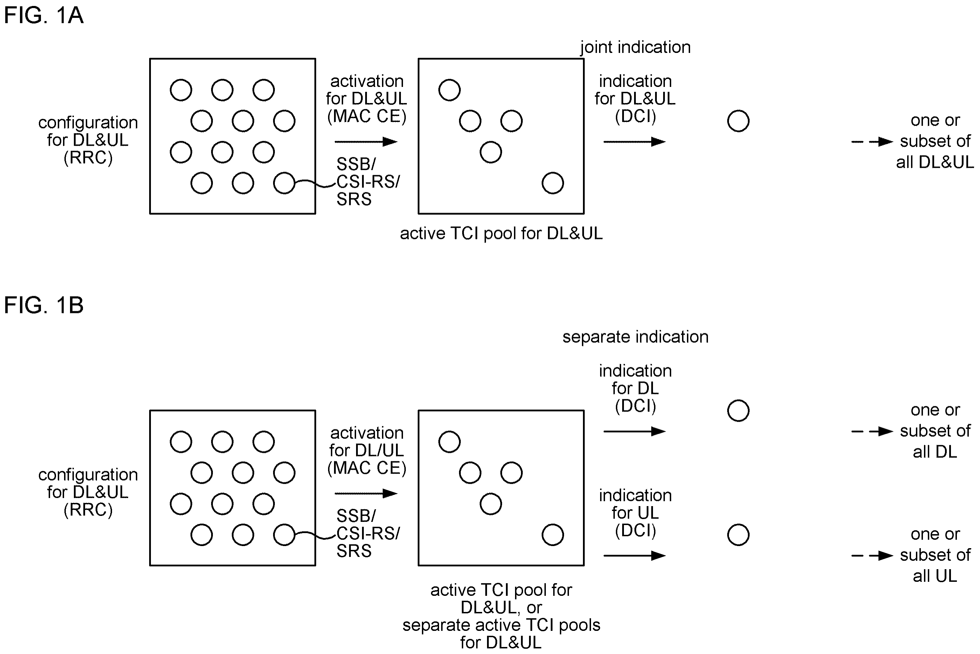

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

### {Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

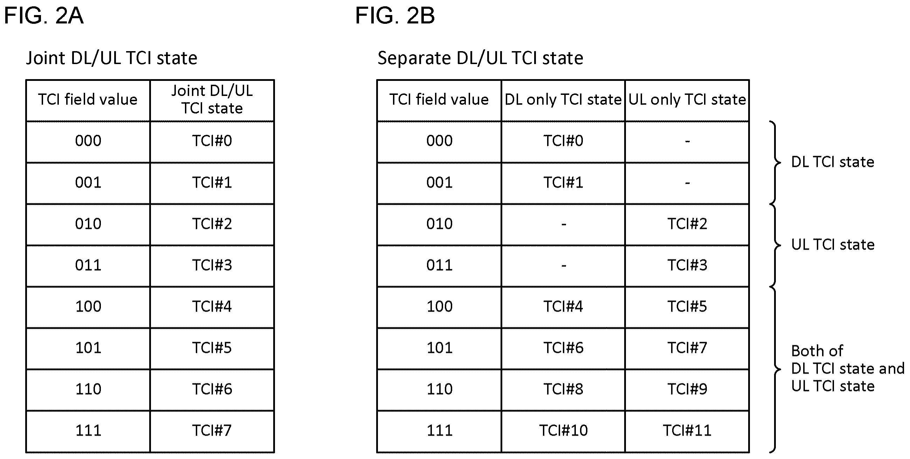

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE determines the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE determines the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (PUSCH Precoder)

In NR, it is studied that a UE supports at least one of codebook (CB) based transmission and non-codebook (NCB) based transmission.

For example, it is studied that the UE determines a precoder (precoding matrix) for at least one of CB based and NCB based uplink shared channel (Physical Uplink Shared Channel (PUSCH)) transmission by using a reference signal for a measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

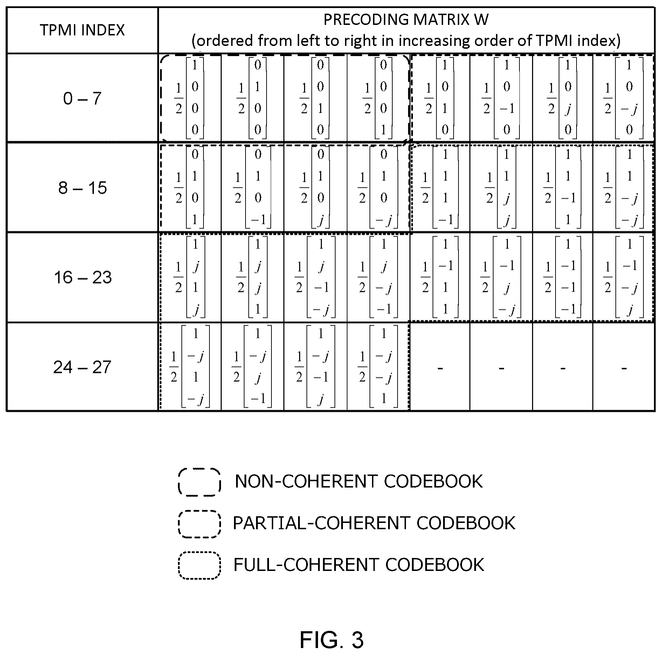

FIG. 3 is a diagram to show an example of association between a precoder type and a TPMI index. FIG. 3 corresponds to a table of precoding matrices W for single-layer (rank 1) transmission using four antenna ports in DFT-s-OFDM (Discrete Fourier Transform spread OFDM, transform precoding enabled).

In FIG. 3, if the precoder type (codebookSubset) is full-, partial-, and non-coherent (fullyAndPartialAndNonCoherent), the UE is notified of a TPMI of any of 0 to 27 for single-layer transmission. If the precoder type is partial- and non-coherent (partialAndNonCoherent), the UE is configured with a TPMI of any of 0 to 11 for single-layer transmission. If the precoder type is non-coherent (nonCoherent), the UE is configured with a TPMI of any of 0 to 3 for single-layer transmission.

Note that, as shown in FIG. 3, a precoding matrix in which only one element in each column is not zero may be referred to as a non-coherent codebook. A precoding matrix in which a certain number (not all) of elements in each column are not zero may be referred to as a partial-coherent codebook. A precoding matrix in which the elements in each column are not all zero may be referred to as a full-coherent codebook.

The non-coherent codebook and the partial-coherent codebook may each be referred to as an antenna selection precoder. The full-coherent codebook may be referred to as a non-antenna selection precoder.

Note that, in the present disclosure, the partial-coherent codebook may correspond to a codebook (precoding matrix) corresponding to a TPMI with which a UE configured with a partial-coherent codebook subset (for example, an RRC parameter "codebookSubset" = "partialAndNonCoherent") is specified by DCI for codebook-based transmission (i.e., for single-layer transmission with four antenna ports, a codebook with TPMI = 4 to 11), excluding a codebook corresponding to a TPMI with which a UE configured with a non-coherent codebook subset (for example, the RRC parameter "codebookSubset" = "nonCoherent") is specified.

Note that, in the present disclosure, the full-coherent codebook may correspond to a codebook (precoding matrix) corresponding to a TPMI with which a UE configured with a full-coherent codebook subset (for example, the RRC parameter "codebookSubset" = "fullyAndPartialAndNonCoherent") is specified by DCI for codebook-based transmission (i.e., for single-layer transmission with four antenna ports, a codebook with TPMI = 12 to 27), excluding a codebook corresponding to a TPMI with which a UE configured with a partial-coherent codebook subset (for example, the RRC parameter "codebookSubset" = "partialAndNonCoherent") is specified.

### (SRS and PUSCH Transmission Control)

In Rel. 15 NR, a terminal (user terminal, User Equipment (UE)) may receive information (SRS configuration information, for example, parameters in RRC control element "SRS-Config") used to transmit a measurement reference signal (for example, a Sounding Reference Signal (SRS)).

Specifically, the UE may receive at least one of information related to one or more SRS resource sets (SRS resource set information, e.g., RRC control element "SRS-ResourceSet") and information related to one or more SRS resources (SRS resource information, e.g., RRC control element "SRS-Resource").

One SRS resource set may be associated with a certain number of SRS resources (a certain number of SRS resources may be grouped). Each SRS resource may be identified by an SRS Resource Indicator (SRI) or SRS Resource Identifier (ID).

The SRS resource set information may include an SRS resource set ID (SRS-ResourceSetId), a list of SRS resource IDs (SRS-ResourceId) used in the resource set, an SRS resource type, and information on SRS usage.

Here, the SRS resource type may indicate any of Periodic SRS (P-SRS), Semi-Persistent SRS (SP-SRS), and Aperiodic CSI (A-SRS). Note that the UE may transmit a P-SRS and an SP-SRS periodically (or periodically after activation) and transmit an A-SRS based on an SRS request in DCI.

The usage (an RRC parameter "usage", an L1 (Layer-1) parameter "SRS-SetUse") may be, for example, beam management (beamManagement), codebook (CB), noncodebook (NCB), antenna switching, or the like. The SRS for codebook or non-codebook usage may be used to determine a precoder for codebook-based or non-codebook-based Physical Uplink Shared Channel (PUSCH) transmission based on the SRI.

For example, for codebook-based transmission, the UE may determine a precoder (precoding matrix) for PUSCH transmission based on the SRI, a Transmitted Rank Indicator (TRI), and a Transmitted Precoding Matrix Indicator (TPMI). For non-codebook-based transmission, the UE may determine a precoder for PUSCH transmission based on the SRI.

The SRS resource information may include an SRS resource ID (SRS-ResourceId), the number of SRS ports, the SRS port number, a transmission Comb, an SRS resource mapping (for example, time and/or frequency resource position, resource offset, resource period, number of repetitions, number of SRS symbols, SRS bandwidth, and so on), hopping-related information, an SRS resource type, a sequence ID, spatial relation information of the SRS, and so on.

The spatial relation information of the SRS (for example, RRC information element "spatialRelationInfo") may indicate the spatial relation information between a certain reference signal and the SRS. The certain reference signal may be at least one of a Synchronization Signal/Physical Broadcast Channel (SS/PBCH) block, a Channel State Information Reference Signal (CSI-RS), and an SRS (for example, another SRS). The SS/PBCH block may be referred to as a Synchronization Signal Block (SSB).

The spatial relation information of the SRS may include as indices of the certain reference signal at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index, a BWP index (BWP ID), and so on corresponding to the above-described certain reference signal.

For a certain SRS resource, if spatial relation information related to the SRS and an SSB or CSI-RS is configured, the UE may transmit the SRS resource using the same spatial domain filter (spatial domain transmission filter) as the spatial domain filter (spatial domain reception filter) for receiving the SSB or CSI-RS. In this case, the UE may assume that the UE receiving beam for SSB or CSI-RS and the UE transmitting beam for SRS are the same.

For a certain SRS (target SRS) resource, if spatial relation information related to the SRS (target SRS) and another SRS (reference SRS) is configured, the UE may transmit the target SRS resource using the same spatial domain filter (spatial domain transmission filter) as the spatial domain filter (spatial domain transmission filter) for transmitting the reference SRS. That is, in this case, the UE may assume that the UE transmitting beam for the reference SRS and the UE transmitting beam for the target SRS are the same.

The UE may determine the spatial relation of a PUSCH scheduled by DCI (for example, DCI format 0_1) based on the value of a certain field (for example, an SRS resource identifier (SRI) field) in the DCI. Specifically, the UE may use, for PUSCH transmission, spatial relation information (for example, RRC information element "spatialRelationInfo") of the SRS resource determined based on the value of the certain field (for example, the SRI).

In Rel. 15/16 NR, if codebook-based transmission is used for a PUSCH, the UE is configured by RRC with a SRS resource set having up to two SRS resources whose usage is codebook, and one of the up to two SRS resources may be indicated by DCI (1-bit SRI field). The transmitting beam for the PUSCH is specified by the SRI field.

The UE may determine the TPMI and number of layers (transmitted rank) for the PUSCH based on a precoding information and number-of-layers field (hereinafter also referred to as the precoding information field). The UE may select a precoder from a codebook for uplink for the same number of ports as the number of SRS ports indicated by a higher layer parameter "nrofSRS-Ports" configured for the SRS resource specified by the SRI field, based on the above TPMI, the number of layers, and so on.

In Rel. 15/16 NR, if non-codebook-based transmission is used for a PUSCH, the UE is configured by RRC with a SRS resource set having up to four SRS resources whose usage is non-codebook, and one or more of the up to four SRS resources may be indicated by DCI (2-bit SRI field).

The UE may determine the number of layers (transmitted rank) for the PUSCH based on the above SRI field. For example, the UE may determine that the number of SRS resources specified by the above SRI field is the same as the number of layers for the PUSCH. The UE may also calculate a precoder for the SRS resource.

If a CSI-RS associated with the SRS resource (or the SRS resource set to which the SRS resource belongs) (which may be referred to as an associated CSI-RS) is configured in a higher layer, the transmitting beam for the PUSCH may be calculated based on (measurements of) the configured associated CSI-RS. Otherwise, the transmitting beam for the PUSCH may be specified by the SRI.

Note that the UE may be configured to use codebook-based PUSCH transmission or non-codebook-based PUSCH transmission by a higher layer parameter "txConfig" that indicates a transmission scheme. The parameter may indicate a value of "codebook" or "nonCodebook".

In the present disclosure, a codebook-based PUSCH (codebook-based PUSCH transmission, codebook-based transmission) may mean a PUSCH in the case where a UE is configured with "codebook" as a transmission scheme. In the present disclosure, a non-codebook-based PUSCH (non-codebook-based PUSCH transmission, non-codebook-based transmission) may mean a PUSCH in the case where a UE is configured with "non-codebook" as a transmission scheme.

Incidentally, future radio communication systems (for example, Rel-18 NR and later versions) assume that simultaneous UL transmission (for example, simultaneous multi-panel UL transmission (STxMP)) using a plurality of beams/panels/TRPs to one or more transmission/reception points (TRPs) is supported.

For example, in Rel. 18, simultaneous UL transmission using up to 2 TRPs/2 panels is under study. Taking into account single-DCI-based and multi-DCI-based multi-TRP operations, it is also assumed that the total number of layers is up to four across all panels, and the total number of codewords is up to two across all panels. Of course, the number of TRPs, the number of panels, the number of layers, and the number of codewords are not limited to the above examples.

### (Single-panel Transmission)

A single-panel UL transmission scheme or candidates for single-panel UL transmission scheme may be applied as at least one of the following transmission schemes A and B (single-panel UL transmission schemes A and B). Note that, in the present disclosure, panel/UE panel may be interchangeably interpreted as a UE capability value set (for example) reported for each UE capability. In the present disclosure, different panels, different spatial relations, different joint TCI states, different TPC parameters, different antenna ports, and so on may be interchangeably interpreted.

### <Transmission Scheme A: Single-panel Single-TRP UL Transmission>

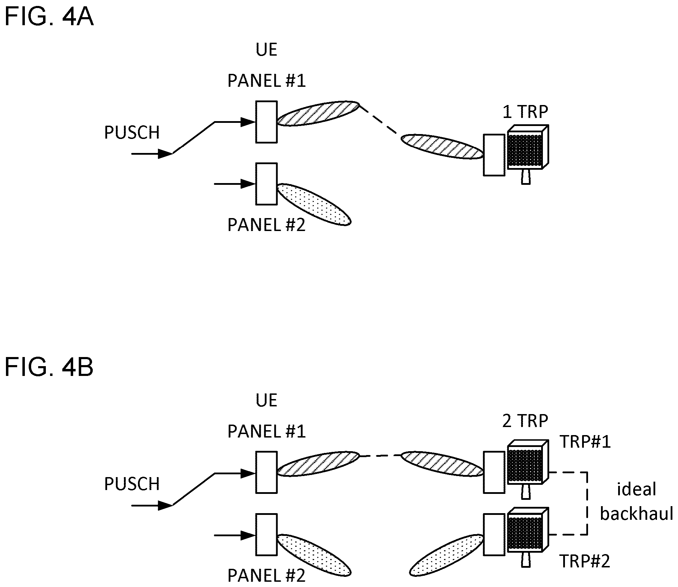

In Rel. 15 and Rel. 16, a transmission scheme is used in which a UE transmits an UL to one TRP from only one beam and only one panel at one time (FIG. 4A).

### <Transmission Scheme B: Single-panel Multi-TRP UL Transmission>

In Rel. 17, UL transmission from only one beam and only one panel at one time, with repeated transmissions to a plurality of TRPs (FIG. 4B), is under study. In an example of FIG. 4B, the UE transmits a PUSCH from panel #1 to TRP #1 (switching beam and panel), and then transmits a PUSCH from panel #2 to TRP #2. The two TRPs are connected via an ideal backhaul.

### (Multi-panel Transmission)

In Rel. 18 and later versions, in order to improve UL throughput/reliability, support of simultaneous UL transmission using a plurality of panels (for example, simultaneous multi-panel UL transmission (STxMP)) to one or more TRPs is under study. In addition, for a certain UL channel (for example, PUSCH/PUCCH), a multi-panel UL transmission scheme is under study.

For multi-panel UL transmission, for example, up to X panels (for example, X = 2) and up to Y panels (for example, Y = 2) may be supported. For multi-panel UL transmission, if UL precoding indication for a PUSCH is supported, codebooks for the legacy systems (for example, Rel. 16 and earlier versions) may be supported for multi-panel simultaneous transmission. Taking into account single-DCI and multi-DCI based multi-TRP operations, the number of layers may be up to x (for example, x = 4) across all panels, and the number of codewords (CWs) may be up to y (for example, y = 2) across all panels.

As a multi-panel UL transmission scheme or candidates for multi-panel UL transmission scheme, at least one of the following schemes 1 to 3 (Multi-panel UL transmission schemes 1 to 3) is under study. Only one of transmission schemes 1 to 3 may be supported. A plurality of schemes including at least one of transmission schemes 1 to 3 may be supported, and one of the plurality of transmission schemes may be configured in the UE.

### <Transmission Scheme 1: Coherent Multi-panel UL Transmission>

A plurality of panels may be synchronized with each other. All layers are mapped to all panels. A plurality of analog beams are indicated. The SRS resource indicator (SRI) field may be extended. This scheme may use up to four layers for UL.

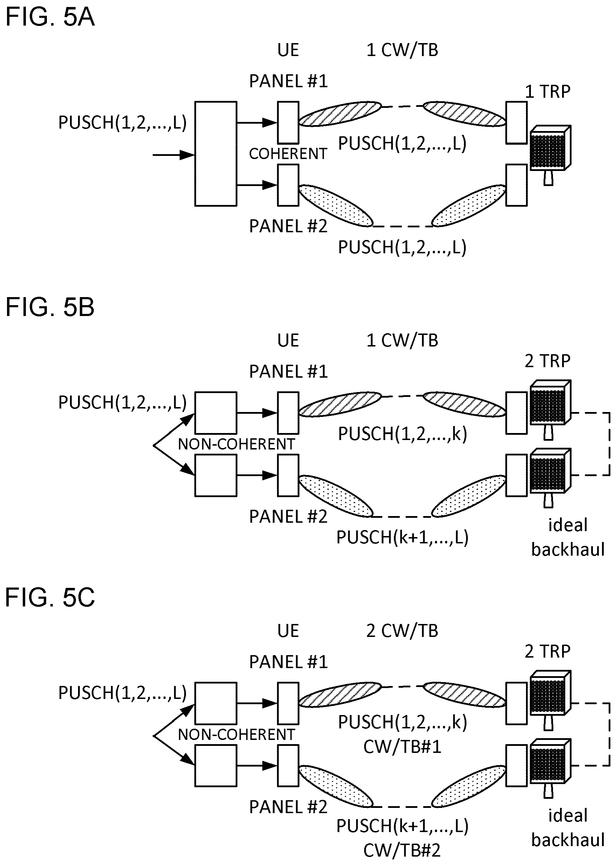

In an example of FIG. 5A, the UE maps one codeword (CW) or one transport block (TB) to L layers (PUSCH (1, 2, ..., L)) and transmits the L layers from each of the two panels. Panels #1 and #2 are coherent. Transmission scheme 1 can obtain a diversity gain. The total number of layers in the two panels is 2L. If the maximum total number of layers is four, the maximum number of layers in one panel is two.

### <Transmission Scheme 2: Non-coherent Multi-Panel UL Transmission of One Codeword (CW) or Transport Block (TB)>

The plurality of panels may not be synchronized. Different layers are mapped to different panels and one CW or TB for a PUSCH from the plurality of panels. A layer corresponding to one CW or TB may be mapped to the plurality of panels. This transmission scheme may use up to 4 layers or up to 8 layers for UL. If up to 8 layers are supported, the transmission scheme may support one CW or TB using up to 8 layers.

In an example of FIG. 5B, the UE maps 1 CW or 1 TB to k layers (PUSCH(1, 2, ..., k)) and L-k layers (PUSCH(k+1, k+2, ..., L)), and transmits the k layers from panel #1 and the L-k layers from panel #2. Transmission scheme 2 can obtain multiplexing and diversity gains. The total number of layers in the two panels is L.

### <Transmission Scheme 3: Non-Coherent Multi-Panel UL Transmission of Two CWs or TBs>

The plurality of panels may not be synchronized. Different layers are mapped to different panels and two CWs or TBs for a PUSCH from the plurality of panels. A layer corresponding to one CW or TB may be mapped to one panel. Layers corresponding to a plurality of CWs or TBs may be mapped to different panels. This transmission scheme may use up to 4 layers or up to 8 layers for UL. If up to 8 layers are supported, the transmission scheme may support up to 4 layers per CW or TB.

In an example of FIG. 5C, of 2 CWs or 2 TBs, the UE maps CW #1 or TB #1 to k layers (PUSCH(1, 2, ..., k)), maps CW #2 or TB #2 to L-k layers (PUSCH(k+1, k+2, ..., L)), and transmits the k layers from panel #1 and the L-k layers from panel #2. Transmission scheme 3 can obtain multiplexing and diversity gains. The total number of layers in the two panels is L.

In each of the above transmission schemes, a base station may use a UL TCI or panel ID to configure or indicate panel-specific transmission for UL transmission. The UL TCI (UL TCI state) may be based on signaling similar to the DL beam indication supported in Rel. 15. The panel ID may be implicitly or explicitly applied to transmission of at least one of the target RS resource or target RS resource set, PUCCH, SRS, and PRACH. If a panel ID is explicitly notified, the panel ID may be configured in at least one of the target RS, the target channel, and the reference RS (for example, DL RS resource configuration or spatial relation information).

### (Simultaneous Multi-panel Transmission)

In one or more of the transmission schemes/modes described above, multi-panel UL transmission (for example, Simultaneous Transmission across Multiple Panels (STxMP)) for scheduling a PUSCH based on one piece of DCI (single DCI)/scheduling a PUSCH based on a plurality of pieces of DCI (multi DCI) is under study.

### <Single-DCI-based STxMP>

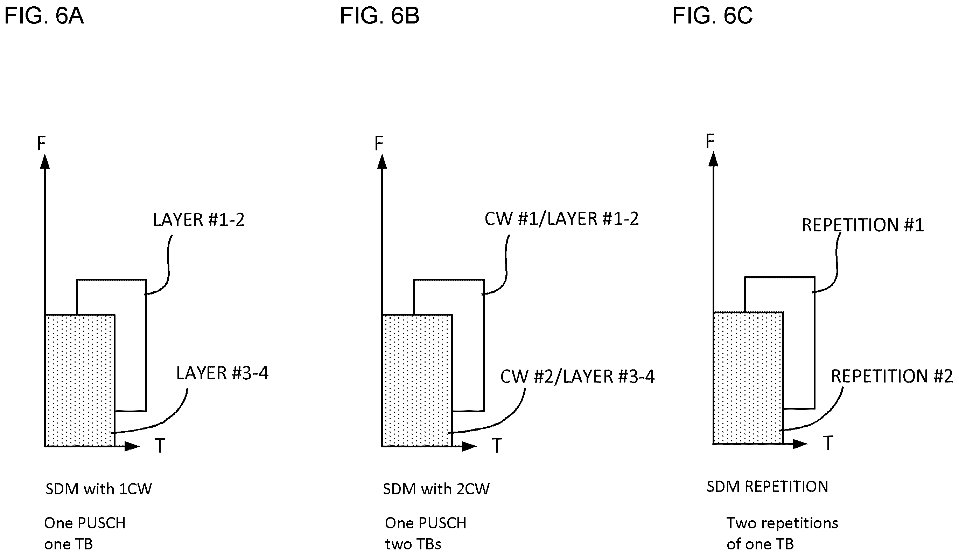

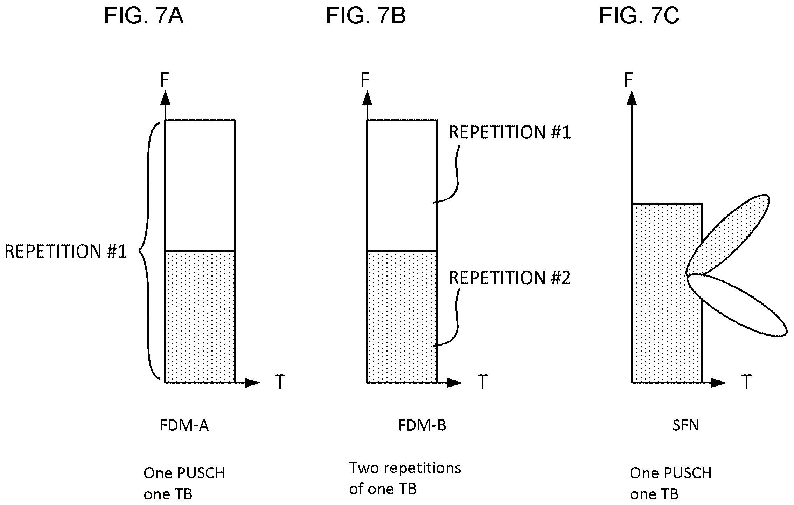

In simultaneous multi-panel transmission (STxMP) in a single-DCI-based multi-TRP system, the following schemes may be applied to UL transmission (for example, PUSCH).
- Space Division Multiplexing (SDM) Scheme: Different layers/DMRS ports of one PUSCH are precoded separately and transmitted simultaneously from different UE beams/panels (see FIGS. 6A and 6B).
- Spatial Division Multiplexing Repetition (SDM repetition) Scheme: Two PUSCH transmission occasions with different Redundancy Versions (RVs) of a same TB are transmitted simultaneously from two different UE beams/panels on same time and frequency resources (see FIG. 6C).
- Frequency Division Multiplexing (FDM)-A Scheme: Different parts of a frequency domain resource in one PUSCH transmission occasion (for example) are transmitted from different UE beams/panels (see FIG. 7A).
- FDM-B Scheme: Two PUSCH transmission occasions with same/different RVs of a same TB are transmitted from different UE beams/panels on non-overlapping frequency domain resources and a same time domain resource (see FIG. 7B).
- SFN-based Transmission Scheme: All the same layers/DMRS ports of one PUSCH are transmitted simultaneously from two different UE beams/panels (see FIG. 7C).

Note that, in the present disclosure, repeated transmission and transmission may be interchangeably interpreted. Transmitting a plurality of TBs may mean transmitting the same TB a plurality of times or transmitting different TBs.

### [Space Division Multiplexing (SDM)]

The UE may assume that repeated PUSCH transmissions using Space Division Multiplexing (SDM) are scheduled on the same time and frequency resources. That is, if a plurality of coherent panels are used, the UE may transmit repeated PUSCH transmissions using SDM in the same time resource and the same frequency resource.

FIG. 6A is a diagram to show an example of repeated transmission using SDM with one CW. In FIG. 6A, the time and frequency resources of layers #1-2 and #3-4 corresponding to PUSCH/PUCCH are the same.

FIG. 6B is a diagram to show an example of repeated transmission using SDM with two CWs. In FIG. 6B, the time and frequency resources of CW #1 and CW #2 corresponding to PUSCH/PUCCH are the same.

FIG. 6C is a diagram to show an example of repeated transmission using SDM. In FIG. 6C, the time and frequency resources of repetition #1 and repetition #2 of PUSCH/PUCCH are the same.

Note that PUSCH transmission using SDM (for example, PUSCH repeated transmission) may be configured such that at least a part of the time and frequency resources overlap.

### [Frequency Division Multiplexing (FDM)]

The UE may assume that repeated PUSCH/PUCCH transmissions using Frequency Division Multiplexing (FDM) are scheduled on a same time resource and different frequency resources. That is, if a plurality of coherent panels are used, the UE may transmit PUSCH/PUCCH repeated transmissions using FDM in a same time resource and different frequency resources.

FIG. 7A is a diagram to show a first example of repeated transmission using FDM (FDM-A). FIG. 7A shows an example in which PUSCH/PUCCH repeated transmission is performed once for one TB/UCI.

FIG. 7B is a diagram to show a second example of repeated transmission using FDM (FDM-B). FIG. 7B shows an example in which PUSCH/PUCCH repeated transmission is performed twice for one TB/UCI.

FIG. 7C shows an example of repeated transmission using a single frequency network (SFN). FIG. 7C shows an example in which one PUSCH/PUCCH is transmitted using a different beam/panel for one TB/UCI.

As shown in FIGS. 6A and 6B, if simultaneous multi-panel transmission based on spatial division multiplexing (STxMP SDM scheme) is performed for non-codebook PUSCH transmission, different layers/DMRS ports of one PUSCH can be precoded separately and transmitted simultaneously from different UP panels.

For simultaneous multi-panel transmission based on spatial division multiplexing of non-codebook-based PUSCH, the following two options are assumed as SRI indication (for example),

### <<Option 1>>

One SRI combination (for example) is indicated. The SRI combination may be indicated from non-codebook SRS resources across two panels (for example, NCB SRS resources across two panels).

### <<Option 2>>

A plurality of (for example, two) SRI combinations (for example, two SRI combinations) are indicated. Each SRI combination may be indicated from non-codebook SRS resources of one panel (for example, NCB SRS resources of one panel).

An SRI combination may include one or more SRS resources (for example, SRS resources for non-codebook). For example, one SRI combination (or SRI field) may indicate the SRI/SRS resources corresponding to each panel. A combination of SRIs may be interchangeably interpreted as an SRI set or an SRI group.

### <Multi-DCI-based STxMP>

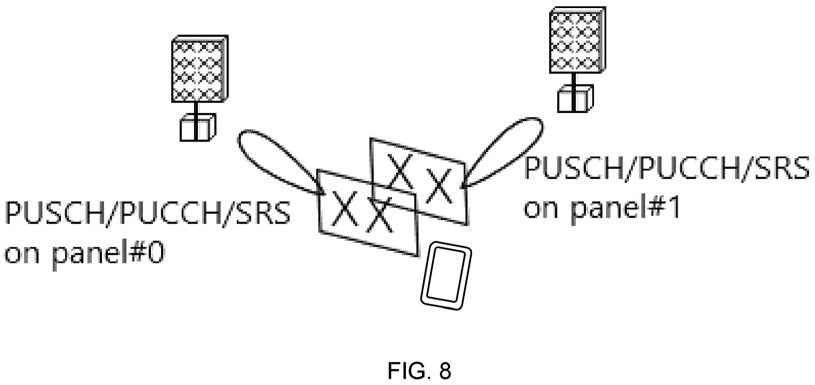

In Rel. 18 and later versions, it is assumed that simultaneous transmission of UL channels/UL signals (for example, PUSCH + PUSCH and PUSCH + PUCCH) is supported in STxMP in a multi-DCI-based multi-TRP system (see FIG. 8). As an example, it is assumed that at least one of simultaneous transmission of a plurality of PUSCHs (for example, PUSCH + PUSCH) and simultaneous transmission of a PUSCH and a PUCCH is supported.

In Rel. 18 and later versions, a UCI multiplexing/mapping method is under study for a case where one PUCCH overlaps with a plurality of PUSCHs in simultaneous transmission of a PUSCH and a PUCCH. The plurality of PUSCHs may be a plurality of PUSCHs (based on STxMP) that are transmitted simultaneously.

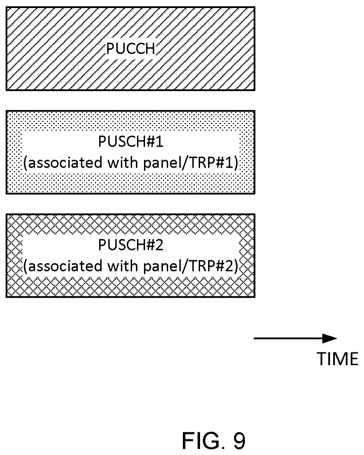

In this case, the plurality of PUSCHs may be associated with different TRPs/panels (see FIG. 9).

In the existing specifications (Rel. 17 and earlier versions), for multi-DCI multi-TRP, when an RRC parameter "ackNackFeedbackMode" is configured to "separate", the UE does not assume that dynamically scheduled PUSCH/PUCCH overlaps with other dynamically scheduled PUSCH/PUCCH in the time domain (see FIG. 8).

This is because when the RRC parameter "ackNackFeedbackMode" is configured to "separate", non-ideal backhaul is assumed between two TRPs, and each TRP cannot be timely notified of the dynamic schedule of the other TRP.

Note that, in the present disclosure, dynamically scheduled PUSCH/PUCCH may mean PUSCH/PUCCH scheduled using dynamic grant, or PUSCH/PUCCH dynamically scheduled using DCI.

### (PUCCH Cell Switching)

In Rel. 17, PUCCH cell switching between a plurality of (for example, two) TDD cells within a same PUCCH cell group is supported to reduce HARQ-ACK feedback delay in TDD operation.

In addition to PCell/PSCell/PUCCH-SCell, one additional SCell may be configured for a PUCCH resource/transmission.

If two PUCCH cell groups are configured, an additional SCell may be configured for each PUCCH cell group.

The PUCCH cell switching may be performed based on a dynamic indication or a semi-static configuration.

If PUCCH cell switching is based on a dynamic indication (which may be referred to as scheme 1), the PUCCH cell may be indicated using a new field (PUCCH cell indicator field) included in DCI. In this case, K1 indicated by a field indicating the timing of HARQ-ACK feedback included in the DCI may be interpreted/determined based on the numerology (for example, subcarrier spacing configuration) of a cell after switching (target PUCCH cell).

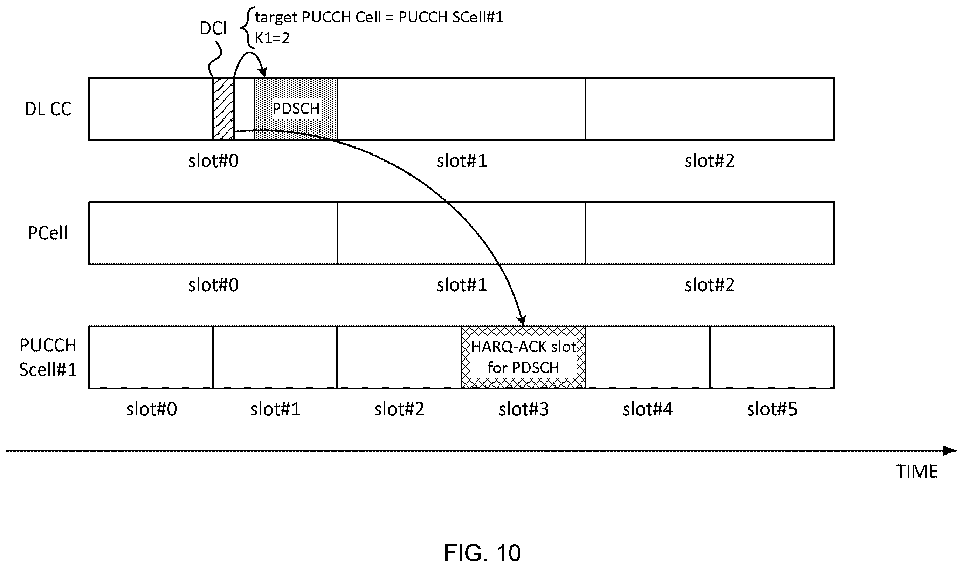

FIG. 10 is a diagram to show an example of PUCCH cell switching scheme 1. In the example shown in FIG. 10, DL CC (cell), PCell, and PUCCH SCell #1 are configured, and DCI and PDSCH are received in DL CC (cell).

In the example shown in FIG. 10, the slot lengths of DL CC and PCell are each different from the slot length of PUCCH SCell #1.

In the example shown in FIG. 10, DCI includes a field indicating the timing of HARQ-ACK feedback and a PUCCH cell indicator field. The field indicating the timing of HARQ-ACK feedback indicates K1 = 2, and the PUCCH cell indicator field indicates PUCCH SCell #1 as the target cell.

In this case, the UE determines that the slot two slots after the slot in which a PDSCH was received (slot #3) in PUCCH SCell #1 is a slot to transmit HARQ-ACK for the PDSCH.

If the PUCCH cell switching is based on semi-static configuration (which may be referred to as scheme 2), the time domain of a PUCCH cell pattern may be configured for each PUCCH cell group with a granularity of one slot of PCell/PSCell/PUCCH-SCell. In this case, K1 indicated by the field indicating the timing of HARQ-ACK feedback included in the DCI may be interpreted/determined based on the numerology of PCell/PSCell/PUCCH-SCell (for example, subcarrier spacing configuration).

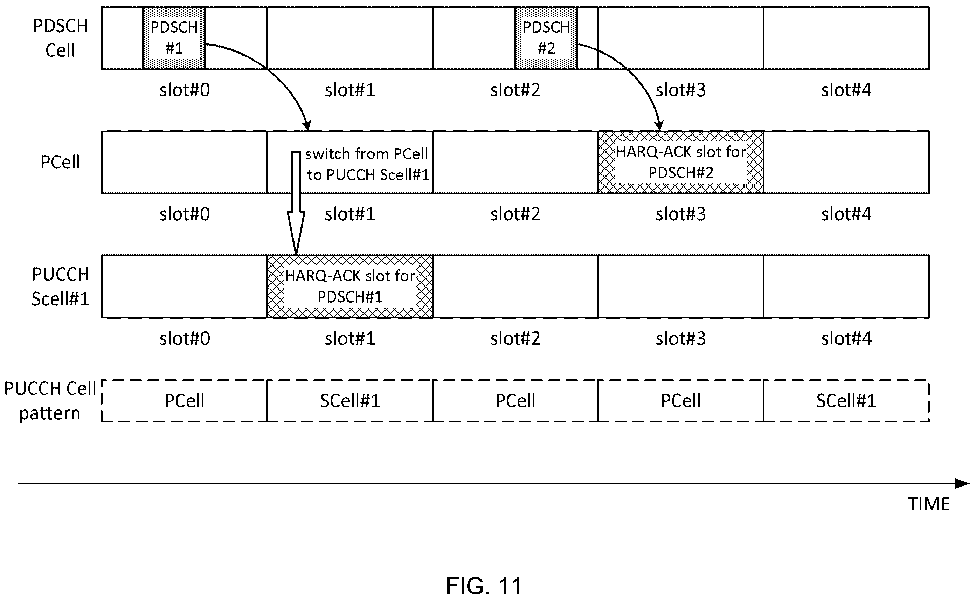

FIG. 11 is a diagram to show an example of PUCCH cell switching scheme 2. In the example shown in FIG. 11, PDSCH Cell, PCell, and PUCCH SCell #1 are configured, and PDSCH #1 and PDSCH #2 are received in PDSCH Cell. In addition, a target PUCCH cell is configured for each slot of PDSCH Cell/PCell (PUCCH cell pattern).

In the example shown in FIG. 11, the timing of transmission of HARQ-ACK of PDSCH #1 is a slot (slot #1) in which SCell is configured in PUCCH cell pattern. In this case, the UE transmits (by switching), in PUCCH SCell, HARQ-ACK for PDSCH #1, which is indicated to be transmitted in PCell.

In the example shown in FIG. 11, the timing of transmission of HARQ-ACK of PDSCH #2 is a slot (slot #3) in which PCell is configured in PUCCH cell pattern. In this case, the UE transmits (without switching), in PCell, HARQ-ACK for PDSCH #1, which is indicated to be transmitted in PCell.

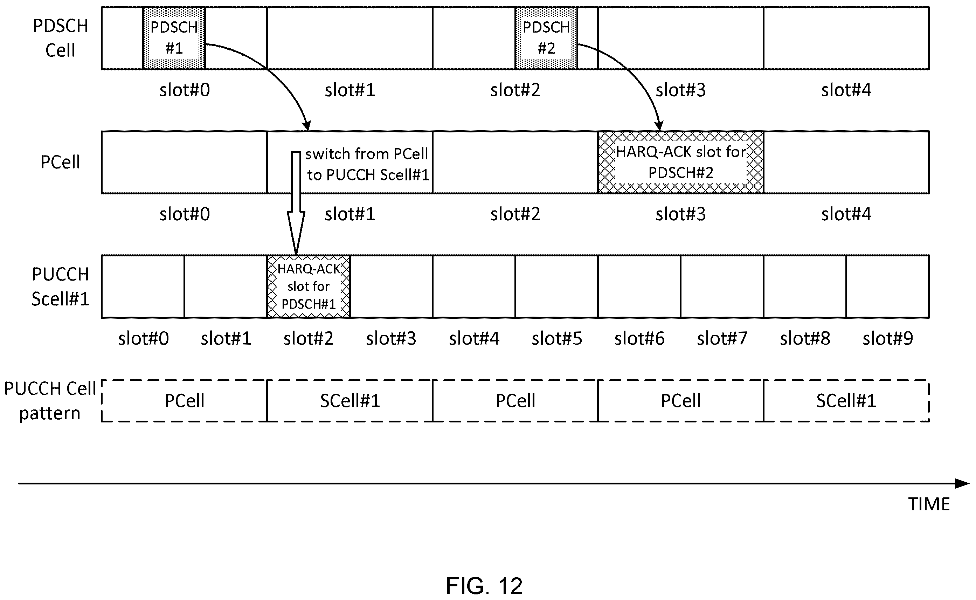

FIG. 12 is a diagram to show another example of PUCCH cell switching scheme 2. An example shown in FIG. 12 differs from FIG. 11 described above in the slot length of PUCCH SCell #1.

If the slots of PCell/PSCell/PUCCH-SCell overlap with a plurality of slots of the target PUCCH cell, the UE may determine that the first slot of the plurality of slots is the slot to be used for PUCCH/HARQ-ACK transmission.

In the example shown in FIG. 12, the UE transmits (by switching) HARQ-ACK for PDSCH #1, in slot #2, which is the first slot of slots #2 and #3 of PUCCH SCell #1 that overlap with slot #1 in PCell.

### (Analysis)

As described above, for future radio communication systems (Rel. 18 and later versions), a UE performing simultaneous UL transmission using a plurality of beams/panels/TRPs (which may also be referred to as simultaneous multi-panel UL transmission (STxMP)) is under study.

Specifically, at least one of the following is under study for STxMP:
- Single-DCI PUSCH SDM scheme.
- Single-DCI PUSCH SFN scheme.
- Multi-DCI overlapping PUSCH+PUSCH scheme.
- Single-DCI PUCCH SFN scheme.

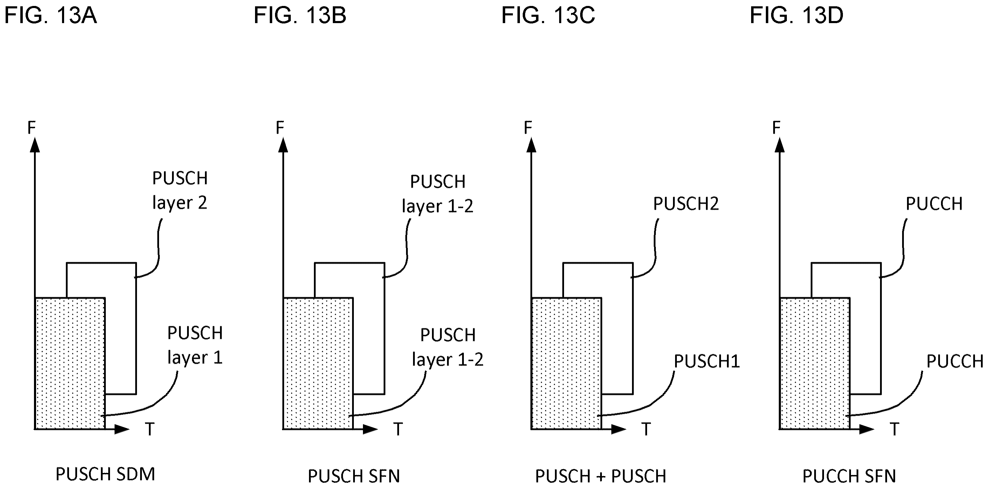

The single-DCI PUSCH SDM scheme may mean that different layers/DMRS ports of one PUSCH scheduled/triggered by one piece of DCI are transmitted simultaneously using different panels (for different TRPs) (FIG. 13A).

The single-DCI PUSCH SFN scheme may mean that a plurality of (for example, all) layers/DMRS ports of one PUSCH scheduled/triggered by one piece of DCI are transmitted simultaneously using different panels (for different TRPs) (FIG. 13B).

The multi-DCI overlapping PUSCH+PUSCH scheme may mean that a plurality of (for example, two) PUSCHs that overlap (at least partially) in the time domain are transmitted simultaneously using different panels (for different TRPs) (FIG. 13C).

The single-DCI PUCCH SFN scheme may mean that one PUCCH is transmitted simultaneously using different panels (for different TRPs) (FIG. 13D).

In the present disclosure, the above-described scheme names are used for convenience, but these are merely examples and are not limited to these examples.

Note that up to n layers (for example, n = 4) may be transmitted across m panels (for example, m = 2).

In Rel. 18 and later versions, extension and application of a unified TCI state framework for a beam indication is under study.

In the single-DCI PUSCH SDM/SFN scheme, a plurality of (for example, two) SRS resource sets may be configured and a plurality of (for example, two) SRI/TPMI fields may be indicated.

In the multi-DCI PUSCH+PUSCH scheme, a plurality of (for example, two) SRS resource sets may be configured, and each of the plurality of SRS resource sets may be associated with different CORESET pool indices, respectively.

In the single-DCI PUCCH SFN scheme, a plurality of (for example, two) TCI states may be associated with one PUCCH resource.

Application of a plurality of (for example, two) SRS resource sets whose usage is CB/NCB to a PUSCH of the SDM/SFN scheme based on STxMP is under study.

Dynamic switching based on STxMP between an SDM/SFN scheme based on STxMP and a TDM scheme using multi-TRP defined in Rel. 17 is not supported. On the other hand, support of switching between the SDM/SFN scheme based on STxMP and the single-TRP scheme is under study.

Use of a specific field in DCI (for example, SRS resource set indicator) for switching between the single-DCI-based STxMP (scheme) and the single-TRP is under study.

The maximum number of layers for the single-TRP and the STxMP SDM may be configured separately.

For the single-TRP transmission, the maximum number of layers may be configured by an RRC parameter, maxRank (or Lmax), as in existing specifications.

For the SDM STxMP scheme, one maximum number of layers may be configured separately for a first SRS resource set and a second SRS resource set (separate from maxRank (or Lmax) for the single-TRP). This configuration may be, for example, an RRC parameter (for example, maxRankPerSRSResourceSet) that indicates a maximum number of layers per SRS resource set.

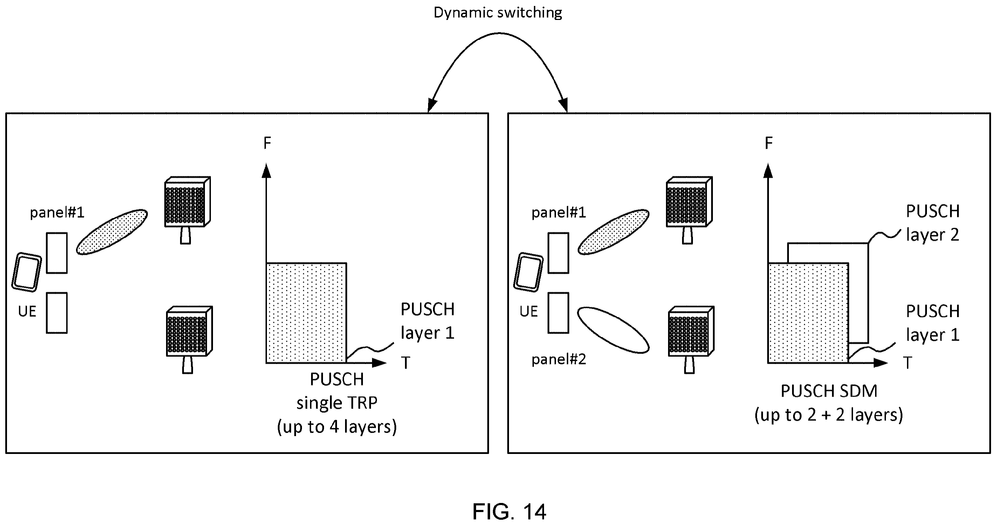

FIG. 14 is a diagram to show an example of the maximum number of layers. In the example shown in FIG. 14, for the single-TRP, the RRC parameter, maxRank, is configured to 4 for the UE. The UE transmits PUSCHs of up to four layers (Layer 1) using the single-TRP/single-panel (Panel #1).

In the example shown in FIG. 14, an RRC parameter (for example, maxRankPerSRSResourceSet) that is configured with the maximum number of layers for the STxMP scheme is configured for the UE. For example, if this parameter is configured to 2, the UE transmits PUSCHs of up to two layers (Layer 1) using a first TRP/panel (Panel #1) and a second TRP/panel (Panel #2), respectively.

The example shown in FIG. 14 shows an example of dynamic switching between the single-TRP PUSCH and the SDM PUSCH.

In Rel. 18 and later versions, application/extension of a unified TCI status framework to PUSCH transmission using single-DCI-based multi-TRP is under study.

When a plurality of (for example, two) SRS resource sets are configured for CB/NCB, a TCI state (joint/UL TCI state) to be applied to a PUSCH scheduled/activated by DCI may be determined based on a specific field (for example, an SRS resource set indicator field) included in the DCI.

Note that the DCI may be, for example, DCI format 0_1/0_2, or may be DCI for at least one of DL grant (DG) and type 2 configured grant (CG) that dynamically schedule a PUSCH.

For example, when the codepoint of the specific field indicates a first value (for example, "00"), the UE may apply a first indicated (joint/UL) TCI state to a plurality of (for example, all) PUSCH antenna ports corresponding to PUSCH transmission occasions.

For example, when the codepoint of the specific field indicates a second value (for example, "01"), the UE may apply a second indicated (joint/UL) TCI state to a plurality of (for example, all) PUSCH antenna ports corresponding to PUSCH transmission occasions.

For example, when the codepoint of the specific field indicates a third value (for example, "10")/fourth value (for example, "11"), for TDM-based PUSCH transmission, a first indicated (joint/UL) TCI state may be applied to a PUSCH transmission occasion associated with a first SRS resource set, and a second indicated (joint/UL) TCI state may be applied to a PUSCH transmission occasion associated with a second SRS resource set. These SRS resource sets may be SRS resource sets for CB/NCB.

On the other hand, when the codepoint of the specific field indicates a third value (for example, "10")/a fourth value (for example, "11"), for SDM/SFN-based PUSCH transmission, no progress has been made in studying how to apply TCI states.

As described above, in Rel. 18 and later versions, application/extension of a unified TCI state framework to each STxMP scheme is under study.

However, there has been insufficient study of methods of applying it. More specifically, in STxMP of SDM/SFN-based PUSCH/PUCCH, there has been insufficient study as to how to indicate a TCI state and as to the association between the indicated TCI state and PUSCH/PUCCH.

If there has been insufficient study of them, transmission of overlapping UL channels/signals may not be performed properly, resulting in degradation of system performance, such as reduced throughput.

In view of this, the inventors of the present invention came up with the idea of a method for solving these problems.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, multi-TRP, a multi-TRP system, a multi-TRP transmission, multi-PDSCH, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a single TRP, single DCI, a single PDCCH, multi-TRPs based on single DCI, a single TRP system, a single TRP transmission, a single PDSCH, a channel using a single TRP, a channel using one TCI state/spatial relation, multi-TRP being not enabled by RRC/DCI, a plurality of TCI states/spatial relations being not enabled by RRC/DCI, one CORESET pool index (CORESETPoolIndex) value being not configured for any CORESET and any codepoint of the TCI field being not mapped to two TCI states, and two TCI states on at least one TCI codepoint being activated may be interchangeably interpreted.

In the present disclosure, a panel, a UE capability value set (for example, a UE capability value set), a TRP, an SRS resource set, a CORESET pool index, a beam group, a TCI state group, a spatial relation group, a reference signal group, and a path loss RS group may be interchangeably interpreted.

In the present disclosure, STxMP, simultaneous UL transmission using multi-panel, UL transmission (a plurality of UL transmissions) in at least the same time resource/domain using multi-panel, UL transmission (a plurality of UL transmissions) in at least the same time resource/domain using multi-TRP, UL transmission (a plurality of UL transmissions) in at least the same time resource/domain for multi-TRP, and so on may be interchangeably interpreted.

In the present disclosure, ignore, drop, abort, cancel, puncture, rate match, postpone, do not transmit, and so on may be interchangeably interpreted.

In the present disclosure, PUSCH based on STxMP subjected to SDM, PUSCH of STxMP subjected to SDM, STxMP PUSCH SDM, PUSCH SDM, PUSCH subjected to SDM, SDM PUSCH, and so on may be interchangeably interpreted.

In the present disclosure, PUSCH based on STxMP using an SFN, PUSCH of STxMP using SFN, STxMP PUSCH SFN, PUSCH SFN, PUSCH using an SFN, SFN PUSCH, and so on may be interchangeably interpreted.

In the present disclosure, PUCCH based on STxMP using an SFN, PUCCH of STxMP using an SFN, STxMP PUCCH SFN, PUCCH SFN, PUCCH using an SFN, SFN PUCCH, and so on may be interchangeably interpreted.

### (Radio Communication Method)

A UE may use a plurality of panels to transmit one or more UL signals/channels at least in the same time domain (for example, same time resource/symbol/slot/sub-slot).

Each embodiment of the present disclosure can also be applied to STxMP of multi-DCI-based PUSCH+PUSCH as appropriate. The multi-DCI-based PUSCH+PUSCH may be transmitted if configuration information for the multi-DCI-based PUSCH+PUSCH is configured to be enabled/on for a UE and (two) CORESET pool indices are configured.

### <First Embodiment>

A first embodiment relates to TCI states that apply to UL signals/channels using SDM.

A UL signal/channel in the first embodiment may be, for example, a PUSCH.

The PUSCH in the first embodiment may be, for example, in STxMP of the PUSCH subjected to SDM. A PUSCH based on STxMP subjected to SDM may be configured for a UE. This configuration may be performed using higher layer signaling (RRC/MAC CE).

The PUSCH in the first embodiment may be scheduled by single DCI.

A plurality of (for example, two) SRS resource sets for a specific usage (for example, codebook (CB)/non-codebook (NCB)) may be configured for a UE. In the present embodiment, an SRS resource set may be an SRS resource set for the specific usage.

### <<Embodiment 1-1>>

For a UE, a PUSCH may be scheduled/activated/triggered using specific DCI.

The specific DCI may be, for example, DCI for scheduling a PUSCH (for example, DCI format 0_1/0_2), or may be DCI for at least one of DL grant (DG) and type 2 configured grant (CG) that dynamically schedule a PUSCH.

The UE may transmit PUSCHs corresponding to different layers at least in the same time domain (for example, time resource/symbol/slot/sub-slot).

The UE may determine based on a specific field included in the DCI an indicated (joint/UL) TCI state to apply to PUSCH/PUSCH antenna ports/PUSCH transmission occasions corresponding to different layers.

Based on the specific field, the UE may determine whether the scheduled PUSCH is a single-TRP PUSCH or an SDM STxMP PUSCH. The UE may determine based on the specific field whether to switch between single-TRP PUSCH transmission and SDM STxMP PUSCH transmission.

The specific field may be, for example, an SRS resource set indicator field or a new field defined in Rel. 18 and later versions.

The specific field may be defined as a specific number of bits (for example, 2 bits).

The UE may determine based on the presence or absence of the specific field with the specific number of bits in the DCI whether to switch between single-TRP PUSCH transmission and SDM STxMP PUSCH transmission. For example, if the specific field with the specific number of bits is present in the DCI, the UE may make a determination on the switching. If the specific field with the specific number of bits is not present in the DCI, the UE may determine/assume that the switching is not to be performed.

For example, when the codepoint of the specific field indicates a first value (for example, "00"), the UE may apply a first indicated (joint/UL) TCI state to a plurality of (for example, all) PUSCH antenna ports/layers associated with a first SRS resource set.

For example, when the codepoint of the specific field indicates a first value (for example, "00"), the UE may transmit a PUSCH using one TRP (single TRP) associated with a first SRS resource set.

For example, when the codepoint of the specific field indicates a second value (for example, "01"), the UE may apply a second indicated (joint/UL) TCI state to a plurality of (for example, all) PUSCH antenna ports/layers associated with a second SRS resource set.

For example, when the codepoint of the specific field indicates a second value (for example, "01"), the UE may transmit a PUSCH using one TRP (single TRP) associated with a second SRS resource set.

For example, when the codepoint of the specific field indicates a third value (for example, "10"), the UE may apply a first indicated (joint/UL) TCI state to one or more first PUSCH antenna ports/layers associated with a first SRS resource set, and may apply a second indicated (joint/UL) TCI state to one or more second PUSCH antenna ports/layers associated with a second SRS resource set.

For example, when the codepoint of the specific field indicates a third value (for example, "10"), the UE may transmit a PUSCH based on STxMP subjected to SDM.

For example, when the codepoint of the specific field indicates a fourth value (for example, "11"), the UE may apply a first indicated (joint/UL) TCI state to one or more second PUSCH antenna ports/layers associated with a second SRS resource set, and may apply a second indicated (joint/UL) TCI state to one or more first PUSCH antenna ports/layers associated with a first SRS resource set.

For example, when the codepoint of the specific field indicates a fourth value (for example, "11"), the UE may transmit a PUSCH based on STxMP subjected to SDM.

Note that, in the present disclosure, if the maximum number of layers for the UE is configured to n, the first PUSCH antenna ports/layers may include the first layer, ..., the m-th layer (m < n), and the first PUSCH antenna ports/layers may include the m+1-th layer, ..., the n-th layer.

In the present disclosure, the first SRS resource set may be an SRS resource set corresponding to a lower (or higher) SRS resource set ID among SRS resource sets whose usage is CB/NCB. In the present disclosure, the second SRS resource set may be an SRS resource set corresponding to a higher (or lower) SRS resource set ID among SRS resource sets whose usage is CB/NCB.

With respect to operations relating to the codepoints (first to fourth values) of the specific field, operations for all codepoints may be applied, or operations for only some of the codepoints (for example, first to third values) may be applied. For example, if only the codepoints with the first to third values are used/supported, the codepoint with the fourth value may be reserved or may be used for another usage.

For example, if operations for only some of the codepoints are applied, it is necessary to associate an SRS resource set with an indicated TCI state.

The UE may determine based on a specific rule (for example, a predefined specification) the association between an SRS resource set and an indicated TCI state.

For example, the UE may assume/expect that the first SRS resource set is associated with a first indicated TCI state and that the second SRS resource set is associated with a second indicated TCI state.

The UE may determine based on higher layer signaling (for example, RRC/MAC CE) the association between an SRS resource set and an indicated TCI state.

For example, information indicating either first or second indicated TCI state may be included in an RRC parameter of the SRS resource set. The UE may determine based on the information the association between the SRS resource set and the indicated TCI state.

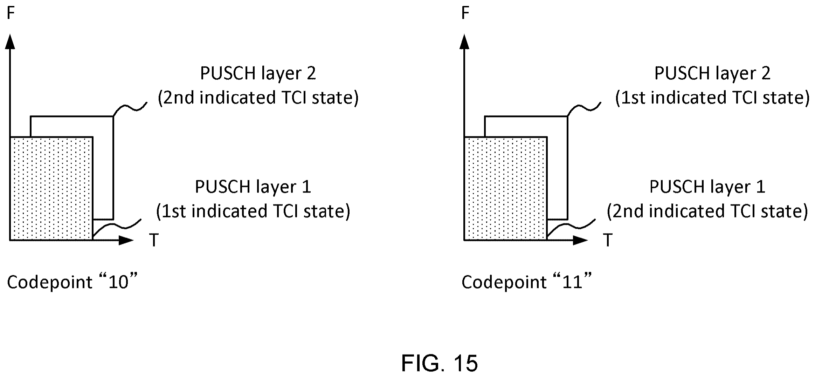

FIG. 15 is a diagram to show an example of application of an indicated TCI state according to the first embodiment. In the example shown in FIG. 15, the UE performs SDM on a first layer (Layer 1) and a second layer (Layer 2) of a PUSCH and transmits them in a same time domain.

In the example shown in FIG. 15, when the codepoint of the specific field included in DCI indicates "10", the UE applies the first indicated TCI state to Layer 1 and the second indicated TCI state to Layer 2.

In the example shown in FIG. 15, when the codepoint of the specific field included in the DCI indicates "11", the UE applies the second indicated TCI state to Layer 1 and the first indicated TCI state to Layer 2.

According to Embodiment 1-1, it is possible to appropriately switch between a single-TRP PUSCH and an STxMP PUSCH subjected to SDM.

### <<Embodiment 1-2>>

In Embodiment 1-2, the association between a PUSCH antenna port/layer and an SRS resource set will be described.

### [Option 1-2-1]

The UE may determine based on a rule predefined in the specifications the association between a PUSCH antenna port/layer and an SRS resource set.

For example, the UE may assume/determine that the PUSCH antenna ports of n lower (or higher) ports/layers are associated with a first SRS resource set, and that the PUSCH antenna ports of m higher (or lower) ports/layers are associated with the first SRS resource set.

n and m may be a same value or different values.

For example, the UE may assume that n ≤ m. For example, the UE may assume that n ≥ m.

The number of ports/layers (at least one of n and m) associated with the first/second SRS resource set may be determined based on a specific field in DCI. The DCI may be DCI for scheduling/activating/triggering a PUSCH.

For example, n may be determined based on a first TPMI field (for example, a first TPMI field for CB) or a first SRI field (for example, a first SRI field for NCB).

For example, m may be determined based on a second TPMI field (for example, a second TPMI field for CB) or a second SRI field (for example, a second SRI field for NCB).

The UE may be notified/indicated as to which of the PUSCH antenna ports of the lower ports/layers and the higher PUSCH antenna ports are associated with the first/second SRS resource set. The indication may be made, for example, using a specific field (for example, an SRS resource set indicator field) in DCI (for example, scheduling DCI).

### [Option 1-2-2]

The UE may be configured/indicated/notified of an association between a PUSCH antenna port/layer and an SRS resource set based on higher layer signaling (RRC/MAC CE)/DCI.

For example, the association with a PUSCH antenna port/layer may be configured for each SRS resource set for a specific usage (for example, CB/NCB).

According to embodiment 1-2, the association between an SRS resource set and a PUSCH port/layer can be appropriately defined.

### <<Embodiment 1-3>>

In Embodiments 1-3, mapping/association will be described between at least two of: an SRS resource set (index of an SRS resource set), a PUSCH port/layer (index of a PUSCH port/layer), and an indicated (joint/UL) TCI state (index of an indicated (joint/UL) TCI state).

The UE may determine the mapping/association based on the specific field in the above Embodiment 1-1.

The UE may determine the mapping/association according to the following Embodiments 1-3-1/1-3-2.

### [Embodiment 1-3-1]

The codepoint of a specific field may indicate a first value (for example, "00")/a second value (for example, "01").

### [[Option 1-3-1-1]]

When the codepoint of the specific field indicates a first value (for example, "00"), the UE may assume/determine that the first indicated (joint/UL) TCI state, the first SRS resource set, and a plurality of (for example, all) layers are associated.

In this case, the UE may determine that a single-TRP PUSCH is to be transmitted.

When the codepoint of the specific field indicates a second value (for example, "01"), the UE may assume/determine that the second indicated (joint/UL) TCI state, the second SRS resource set, and a plurality of (for example, all) layers are associated.

In this case, the UE may determine that a single-TRP PUSCH is to be transmitted.

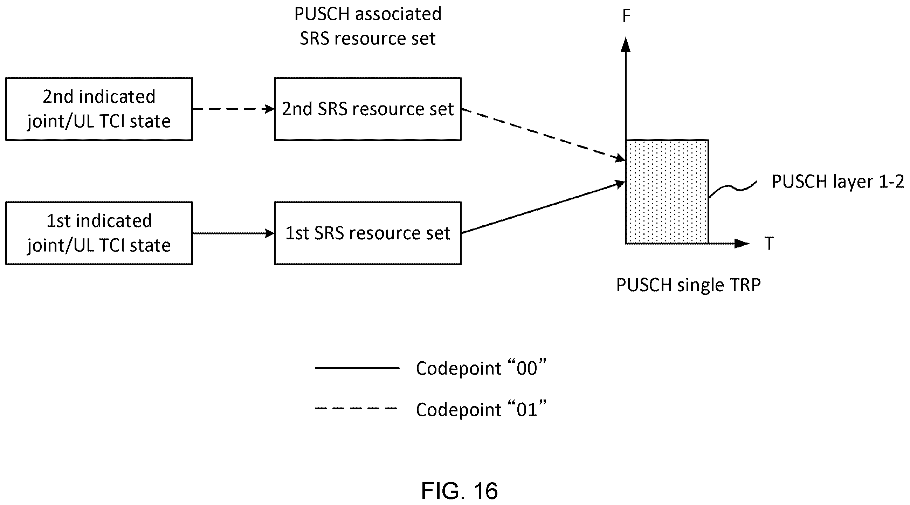

FIG. 16 is a diagram to show an example of association between an indicated TCI state, an SRS resource set, and a layer, according to Option 1-3-1-1. In the example shown in FIG. 16, when the codepoint of the specific field indicates "00", the UE determines that the first indicated (joint/UL) TCI state, the first SRS resource set, and all PUSCH layers (Layers 1 and 2) are associated. When the codepoint of the specific field indicates "01", the UE determines that the second indicated (joint/UL) TCI state, the second SRS resource set, and all PUSCH layers (Layers 1 and 2) are associated.

### [[Option 1-3-1-2]]

When the codepoint of the specific field indicates a first value (for example, "00"), the UE may assume/determine that the first indicated (joint/UL) TCI state, the second SRS resource set, and a plurality of (for example, all) layers are associated.

In this case, the UE may determine that a single-TRP PUSCH is to be transmitted.

When the codepoint of the specific field indicates a second value (for example, "01"), the UE may assume/determine that the second indicated (joint/UL) TCI state, the first SRS resource set, and a plurality of (for example, all) layers are associated.

In this case, the UE may determine that a single-TRP PUSCH is to be transmitted.

### [Embodiment 1-3-2]

The codepoint of the specific field may indicate a third value (for example, "10")/a second value (for example, "11").

### [[Option 1-3-2-1]]

When the codepoint of the specific field indicates a third value (for example, "10"), the UE may assume/determine that the first indicated (joint/UL) TCI state, the first SRS resource set, and the first layer are associated, and that the second indicated (joint/UL) TCI state, the second SRS resource set, and the second layer are associated.

In this case, the UE may determine that an STxMP PUSCH subjected to SDM is to be transmitted.

When the codepoint of the specific field indicates a fourth value (for example, "11"), the UE may assume/determine that the first indicated (joint/UL) TCI state, the first SRS resource set, and the second layer are associated, and that the second indicated (joint/UL) TCI state, the second SRS resource set, and the first layer are associated.

In this case, the UE may determine that an STxMP PUSCH subjected to SDM is to be transmitted.

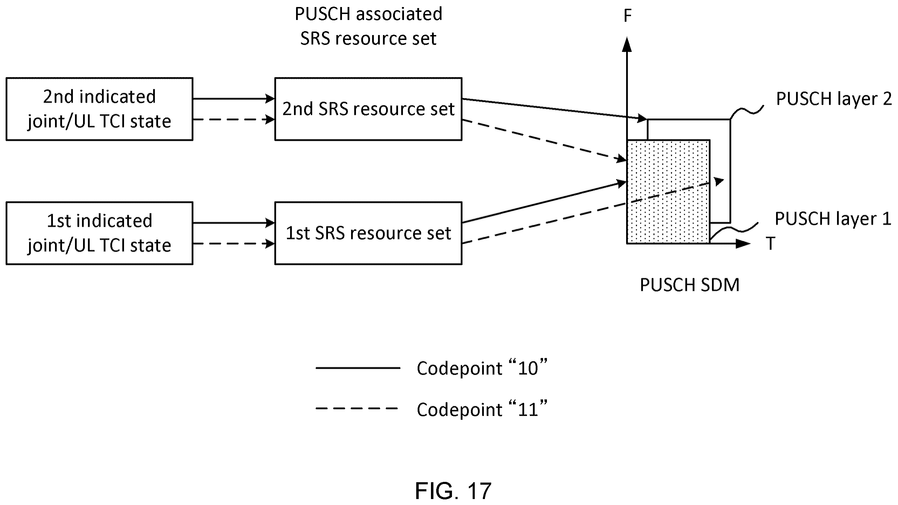

FIG. 17 is a diagram to show an example of association between an indicated TCI state, an SRS resource set, and a layer, according to Option 1-3-2-1. In the example shown in FIG. 17, when the codepoint of the specific field indicates "01", the UE determines that the first indicated (joint/UL) TCI state, the first SRS resource set, and the PUSCH Layer 1 are associated, and the second indicated (joint/UL) TCI state, the second SRS resource set, and the PUSCH Layer 2 are associated. When the codepoint of the specific field indicates "11", the UE determines that the first indicated (joint/UL) TCI state, the first SRS resource set, and the PUSCH Layer 2 are associated, and the second indicated (joint/UL) TCI state, the second SRS resource set, and the PUSCH Layer 1 are associated.

### [[Option 1-3-2-2]]

When the codepoint of the specific field indicates a third value (for example, "10"), the UE may assume/determine that the first indicated (joint/UL) TCI state, the first SRS resource set, and the first layer are associated, and that the second indicated (joint/UL) TCI state, the second SRS resource set, and the second layer are associated.

In this case, the UE may determine that an STxMP PUSCH subjected to SDM is to be transmitted.

When the codepoint of the specific field indicates a fourth value (for example, "11"), the UE may assume/determine that the first indicated (joint/UL) TCI state, the second SRS resource set, and the first layer are associated, and that the second indicated (joint/UL) TCI state, the first SRS resource set, and the second layer are associated.

In this case, the UE may determine that an STxMP PUSCH subjected to SDM is to be transmitted.

### [[Option 1-3-2-3]]

When the codepoint of the specific field indicates a third value (for example, "10"), the UE may assume/determine that the first indicated (joint/UL) TCI state, the first SRS resource set, and the first layer are associated, and that the second indicated (joint/UL) TCI state, the second SRS resource set, and the second layer are associated.

In this case, the UE may determine that an STxMP PUSCH subjected to SDM is to be transmitted.

When the codepoint of the specific field indicates a fourth value (for example, "11"), the UE may assume/determine that the first indicated (joint/UL) TCI state, the second SRS resource set, and the second layer are associated, and that the second indicated (joint/UL) TCI state, the first SRS resource set, and the first layer are associated.

In this case, the UE may determine that an STxMP PUSCH subjected to SDM is to be transmitted.

Note that, in at least one of the options of Embodiment 1-3-2, the fourth value (for example, "11") may be reserved (may not be used).

According to Embodiment 1-3, the association between an SRS resource set, a PUSCH port/layer, and an indicated TCI state can be appropriately defined.

According to the first embodiment as described above, it is possible to appropriately transmit an STxMP PUSCH subjected to SDM.

### <Second Embodiment>

A second embodiment relates to indications of TCI states that apply to UL signals/channels (UL transmissions) using a single frequency network (SFN).

A UL signal/channel in the second embodiment may be, for example, a PUSCH.

In the present disclosure, UL transmission using an SFN may mean that the UE transmits a same UL signal/channel on a same resource (resource element) in each panel using a different indication (joint/UL TCI state). UL transmission using an SFN may also mean UL transmission in which a plurality of (for example, all) DMRS ports/antenna ports for the UL transmission are in QCL relation with a plurality of (for example, two) TCI states (indicated TCI states).

The PUSCH in the second embodiment may be, for example, in STxMP of the PUSCH using an SFN. A PUSCH based on STxMP using an SFN may be configured for a UE. This configuration may be performed using higher layer signaling (RRC/MAC CE).

The PUSCH in the second embodiment may be scheduled by single DCI.

A plurality of (for example, two) SRS resource sets for a specific usage (for example, codebook (CB)/non-codebook (NCB)) may be configured for a UE. In the present embodiment, an SRS resource set may be an SRS resource set for the specific usage.

### <<Embodiment 2-1>>

For a UE, a PUSCH may be scheduled/activated/triggered using specific DCI.

The specific DCI may be, for example, DCI for scheduling a PUSCH (for example, DCI format 0_1/0_2), or may be DCI for at least one of DL grant (DG) and type 2 configured grant (CG) that dynamically schedule a PUSCH.

For a same PUSCH, the UE may transmit each PUSCH with a different indicated TCI state applied, at least in the same time domain (for example, time resource/symbol/slot/sub-slot).

The UE may determine based on a specific field included in the DCI an indicated (joint/UL) TCI state to apply to PUSCH/PUSCH antenna ports/PUSCH transmission occasions.

The UE may determine based on the specific field whether to switch between single-TRP PUSCH transmission and SFN STxMP PUSCH transmission.

The specific field may be, for example, an SRS resource set indicator field or a new field defined in Rel. 18 and later versions.

The specific field may be defined as a specific number of bits (for example, 2 bits).

The UE may determine based on the presence or absence of the specific field with the specific number of bits in the DCI whether to switch between single-TRP PUSCH transmission and SFN STxMP PUSCH transmission. For example, if the specific field with the specific number of bits is present in the DCI, the UE may make a determination on the switching. If the specific field with the specific number of bits is not present in the DCI, the UE may determine/assume that the switching is not to be performed.

For example, when the codepoint of the specific field indicates a first value (for example, "00"), the UE may apply a first indicated (joint/UL) TCI state to a plurality of (for example, all) PUSCH antenna ports/layers associated with a first SRS resource set.

For example, when the codepoint of the specific field indicates a first value (for example, "00"), the UE may transmit a PUSCH using one TRP (single TRP) associated with a first SRS resource set.

For example, when the codepoint of the specific field indicates a second value (for example, "01"), the UE may apply a second indicated (joint/UL) TCI state to a plurality of (for example, all) PUSCH antenna ports/layers associated with a second SRS resource set.

For example, when the codepoint of the specific field indicates a second value (for example, "01"), the UE may transmit a PUSCH using one TRP (single TRP) associated with a second SRS resource set.

For example, when the codepoint of the specific field indicates a third value (for example, "10"), the UE may apply a first indicated (joint/UL) TCI state to one or more (for example, all) PUSCH antenna ports/layers associated with a first SRS resource set, and may apply a second indicated (joint/UL) TCI state to one or more (for example, all) PUSCH antenna ports/layers associated with a second SRS resource set.

For example, when the codepoint of the specific field indicates a third value (for example, "10"), the UE may transmit a PUSCH based on STxMP using an SFN.

For example, when the codepoint of the specific field indicates a fourth value (for example, "11"), the UE may apply a first indicated (joint/UL) TCI state to one or more (for example, all) PUSCH antenna ports/layers associated with a second SRS resource set, and may apply a second indicated (joint/UL) TCI state to one or more (for example, all) PUSCH antenna ports/layers associated with a first SRS resource set.

For example, when the codepoint of the specific field indicates a fourth value (for example, "11"), the UE may transmit a PUSCH based on STxMP using an SFN.

With respect to operations relating to the codepoints (first to fourth values) of the specific field, operations for all codepoints may be applied, or operations for only some of the codepoints (for example, first to third values) may be applied. For example, if only the codepoints with the first to third values are used/supported, the codepoint with the fourth value may be reserved or may be used for another usage.

For example, if operations for only some of the codepoints are applied, it is necessary to associate an SRS resource set with an indicated TCI state.

The UE may determine based on a specific rule (for example, a predefined specification) the association between an SRS resource set and an indicated TCI state.

For example, the UE may assume/expect that the first SRS resource set is associated with a first indicated TCI state and that the second SRS resource set is associated with a second indicated TCI state.

The UE may determine based on higher layer signaling (for example, RRC/MAC CE) the association between an SRS resource set and an indicated TCI state.

For example, information indicating either first or second indicated TCI state may be included in an RRC parameter of the SRS resource set. The UE may determine based on the information the association between the SRS resource set and the indicated TCI state.

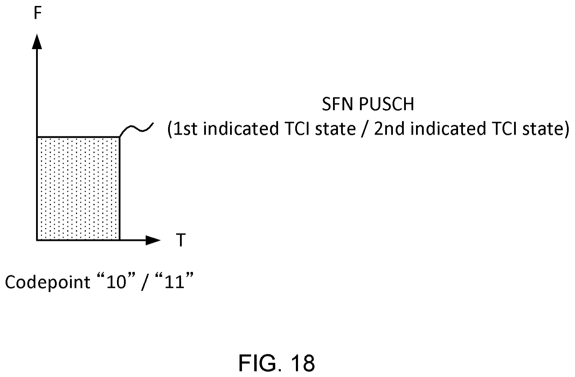

FIG. 18 is a diagram to show an example of application of an indicated TCI state according to the second embodiment. In the example shown in FIG. 18, the UE transmits Layers 1 and 2 of a PUSCH in a same time domain using an SFN.

In the example shown in FIG. 18, when the codepoint of the specific field included in DCI indicates "10"/[11], the UE applies the first indicated TCI state and the second indicated TCI state to all layers (Layers 1 and 2) and performs PUSCH transmission using the SFN.

According to Embodiment 2-1, it is possible to appropriately switch between a single-TRP PUSCH and an STxMP PUSCH using an SFN.

### <<Embodiment 2-2>>

In Embodiments 2-2, mapping/association will be described between at least two of: an SRS resource set (index of an SRS resource set), a PUSCH port/layer (index of a PUSCH port/layer), and an indicated (joint/UL) TCI state (index of an indicated (joint/UL) TCI state).

The UE may determine the mapping/association based on the specific field in the above Embodiment 2-1.

The UE may determine the mapping/association according to the following Embodiments 2-2-1/2-2-2.

### [Embodiment 2-2-1]

The codepoint of a specific field may indicate a first value (for example, "00")/a second value (for example, "01").

### [[Option 2-2-1-1]]

When the codepoint of the specific field indicates a first value (for example, "00"), the UE may assume/determine that the first indicated (joint/UL) TCI state, the first SRS resource set, and a plurality of (for example, all) layers are associated.

In this case, the UE may determine that a single-TRP PUSCH is to be transmitted.

When the codepoint of the specific field indicates a second value (for example, "01"), the UE may assume/determine that the second indicated (joint/UL) TCI state, the second SRS resource set, and a plurality of (for example, all) layers are associated.

In this case, the UE may determine that a single-TRP PUSCH is to be transmitted.

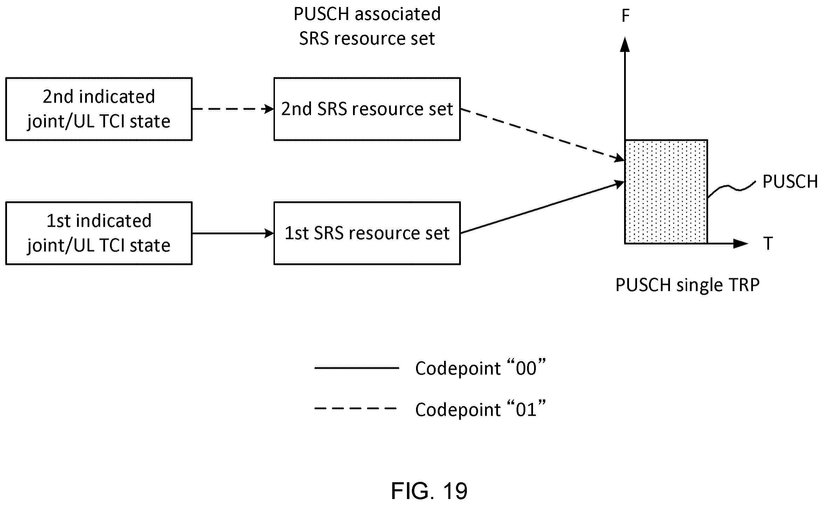

FIG. 19 is a diagram to show an example of association between an indicated TCI state, an SRS resource set, and a layer, according to Option 2-2-1-1. In the example shown in FIG. 19, when the codepoint of the specific field indicates "00", the UE determines that the first indicated (joint/UL) TCI state, the first SRS resource set, and all PUSCH layers (Layers 1 and 2) are associated. When the codepoint of the specific field indicates "01", the UE determines that the second indicated (joint/UL) TCI state, the second SRS resource set, and all PUSCH layers (Layers 1 and 2) are associated.

### [[Option 2-2-1-2]]

When the codepoint of the specific field indicates a first value (for example, "00"), the UE may assume/determine that the first indicated (joint/UL) TCI state, the second SRS resource set, and a plurality of (for example, all) layers are associated.

In this case, the UE may determine that a single-TRP PUSCH is to be transmitted.

When the codepoint of the specific field indicates a second value (for example, "01"), the UE may assume/determine that the second indicated (joint/UL) TCI state, the first SRS resource set, and a plurality of (for example, all) layers are associated.

In this case, the UE may determine that a single-TRP PUSCH is to be transmitted.

### [Embodiment 2-2-2]

The codepoint of the specific field may indicate a third value (for example, "10")/a second value (for example, "11").

When the codepoint of the specific field indicates a third value (for example, "10"), the UE may assume/determine that the first indicated (joint/UL) TCI state, the first SRS resource set, and a plurality of (for example, all) layers are associated, and that the second indicated (joint/UL) TCI state, the second SRS resource set, and a plurality of (for example, all) layers are associated.

In this case, the UE may determine that an STxMP PUSCH using an SFN is to be transmitted.

When the codepoint of the specific field indicates a fourth value (for example, "11"), the UE may assume/determine that the first indicated (joint/UL) TCI state, the second SRS resource set, and a plurality of (for example, all) layers are associated, and that the second indicated (joint/UL) TCI state, the first SRS resource set, and a plurality of (for example, all) layers are associated.

In this case, the UE may determine that an STxMP PUSCH subjected to SDM is to be transmitted.

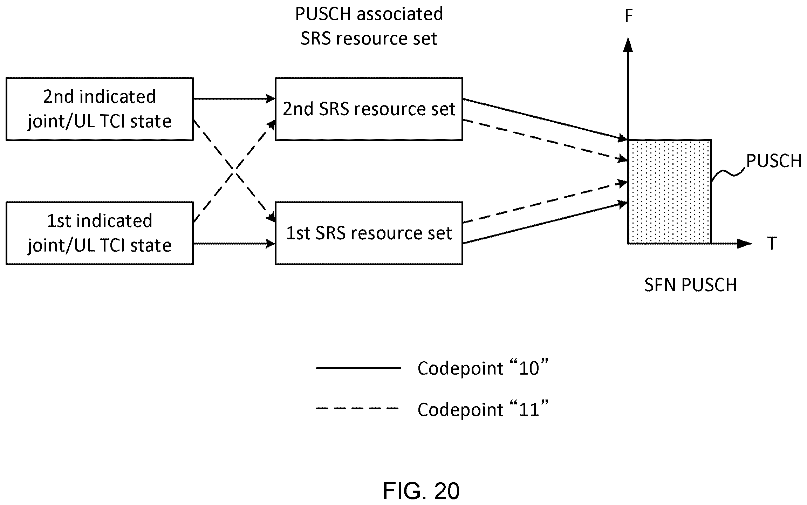

FIG. 20 is a diagram to show an example of association between an indicated TCI state, an SRS resource set, and a layer, according to Embodiment 2-2-2. In the example shown in FIG. 20, when the codepoint of the specific field indicates "01", the UE determines that the first indicated (joint/UL) TCI state, the first SRS resource set, and all layers are associated, and that the second indicated (joint/UL) TCI state, the second SRS resource set, and all layers are associated. When the codepoint of the specific field indicates "11", the UE determines that the first indicated (joint/UL) TCI state, the second SRS resource set, and all layers are associated, and that the second indicated (joint/UL) TCI state, the first SRS resource set, and all layers are associated.

Note that, in at least one of the options of Embodiment 2-2-2, the fourth value (for example, "11") may be reserved (may not be used).

According to Embodiment 2-2, the association between an SRS resource set, a PUSCH port/layer, and an indicated TCI state can be appropriately defined.

According to the second embodiment as described above, it is possible to appropriately transmit an STxMP PUSCH using an SFN.

### <Third Embodiment>

A third embodiment relates to indications of TCI states that apply to UL signals/channels (UL transmissions) using a single frequency network (SFN).

A UL signal/channel in the third embodiment may be, for example, a PUCCH.

The PUCCH in the third embodiment may be, for example, in STxMP of the PUCCH using an SFN. A PUCCH based on STxMP using an SFN may be configured for a UE. This configuration may be performed using higher layer signaling (RRC/MAC CE).

The PUCCH in the third embodiment may be scheduled/triggered by single DCI. The PUCCH in the third embodiment may be a PUCCH corresponding to single DCI.

### <<Embodiment 3-1>>

The UE may determine based on higher layer signaling (RRC/MAC CE)/DCI an indicated (joint/UL) TCI state to apply to a PUCCH.

The UE may determine based on higher layer signaling (RRC/MAC CE)/DCI whether the PUCCH to be configured/indicated is a PUCCH using an SFN.

In other words, the UE may determine based on higher layer signaling (RRC/MAC CE)/DCI whether to switch between an STxMP PUCCH using an SFN and another PUCCH (for example, a single-TRP PUCCH).

For one PUCCH resource, one or more (for example, two) joint/UL TCI states may be indicated (associated). For example, for one PUCCH resource, RRC signaling may be used to indicate (associate) either a first joint/UL TCI state, a second joint/UL TCI state, or both.

The UE may then determine a PUCCH resource using a specific field (for example, a PUCCH Resource Indicator (PRI) field) included in DCI for scheduling/activating/triggering a PUCCH.

In this case, if a plurality of (for example, two) joint/UL TCI states are indicated for (associated with) PUCCH resources used by the UE for UCI transmission, the UE may determine that SFN PUCCH transmission or PUCCH TDM repeated transmission (repetition) (as defined in Rel. 17) is to be performed.

If one joint/UL TCI state is indicated for (associated with) the PUCCH resource used by the UE for UCI transmission, the UE may determine that transmission for a single-TRP PUCCH is to be performed.

In this case, the UE may determine based on the configured/indicated number of PUCCH repetitions whether to perform single-TRP PUCCH or single-DCI-based PUCCH TDM.

If (dynamic) switching between SFN PUCCH transmission and PUCCH TDM repeated transmission (repetition) (as defined in Rel. 17) is supported, it is necessary to determine which of these is to be performed.

For example, the UE may determine based on higher layer signaling (RRC/MAC CE) whether to perform SFN PUCCH transmission or Rel. 17 PUCCH TDM repeated transmission (repetition) for each PUCCH resource.

For example, for each PUCCH resource (PUCCH resource configuration), either SFN PUCCH transmission or PUCCH TDM repeated transmission (repetition) (as defined in Rel. 17) may be configured. A specific field (for example, a PRI field) may be used for switching of the PUCCH resource.

For example, the UE may determine based on the number of repetitions indicated for the PUCCH resource whether to perform SFN PUCCH transmission or PUCCH TDM repeated transmission (repetition) (as defined in Rel. 17). A specific field (for example, a PRI field) may be used for switching of the PUCCH resource.

For example, if repetition is not indicated, the UE may determine that SFN PUCCH transmission is to be performed. If the number of repetitions is indicated as greater than 1, the UE may determine that PUCCH TDM repeated transmission (repetition) is to be performed.

According to this, when the NW/base station cannot secure the resources to schedule PUCCH repetition for a plurality of slots/sub-slots, an SFN PUCCH can be used, allowing scheduling according to the resource situation.

In the present disclosure, the number of PUCCH repetitions may be configured for each PUCCH resource. The number of PUCCH repetitions may be configured commonly to a plurality of (for example, all) PUCCH resources in a CC/BWP.

For example, the UE may determine based on a specific field included in DCI (scheduling/triggering DCI) whether to perform SFN PUCCH transmission or PUCCH TDM repeated transmission (repetition) (as defined in Rel. 17). For the specific field, a new field defined in Rel. 18 and later versions may be used, or an existing field (as defined Rel. 17 and earlier versions) may be reused.

For example, if the number of repetitions is indicated/configured as greater than 1 for the UE and an SFN PUCCH is configured, the UE may ignore the indication/configuration of the number of repetitions and determine/consider the number of repetitions to be 1.

For example, the UE may not assume that an SFN PUCCH is configured and the number of repetitions is configured/indicated as greater than 1.

For example, if the number of repetitions is configured/indicated as greater than 1 and an SFN PUCCH is configured, the UE may perform repeated transmission of the SFN PUCCH based on that number of repetitions.

(Dynamic) switching between SFN PUCCH transmission and PUCCH TDM repeated transmission (repetition) (as defined in Rel. 17) may not be supported.

In this case, either SFN PUCCH transmission or PUCCH TDM repeated transmission (repetition) (as defined in Rel. 17) may be configured for the UE.

This configuration may be performed for each BWP/CC.

If the configuration is not performed, the UE may determine whether to perform single-TRP PUCCH or single-DCI-based PUCCH TDM. In this case, the UE may not assume/expect that a plurality of (for example, two) joint/UL TCI states per PUCCH (resource) are indicated.

If the configuration is not performed, the UE may determine whether to perform single-TRP PUCCH or single-DCI-based PUCCH TDM. If a plurality of (for example, two) joint/UL TCI states are indicated for the UE, the UE may select a specific indicated TCI state (for example, a first (or second) indicated (joint/UL) TCI state).

According to Embodiment 3-1, it is possible to appropriately switch between an STxMP PUCCH using an SFN and another PUCCH transmission.

### <<Embodiment 3-2>>

The UE may support PUCCH cell switching.

The configuration for PUCCH (for example, configuration for one of: SFN PUCCH, (Rel. 17) PUCCH TDM repetition, single-DCI-based PUCCH TDM repetition, and single-TRP PUCCH) may be configured for each cell/CC/BWP/cell group.

If the configuration for PUCCH differs for each cell/CC/BWP/cell group, when the PUCCH cell switching is performed, the UE needs to determine which cell/CC/BWP/cell group configuration to follow.

### [Option 3-2-1]

The UE may transmit a PUCCH according to the configuration in the cell/CC/BWP/cell group in which a PDSCH is transmitted.

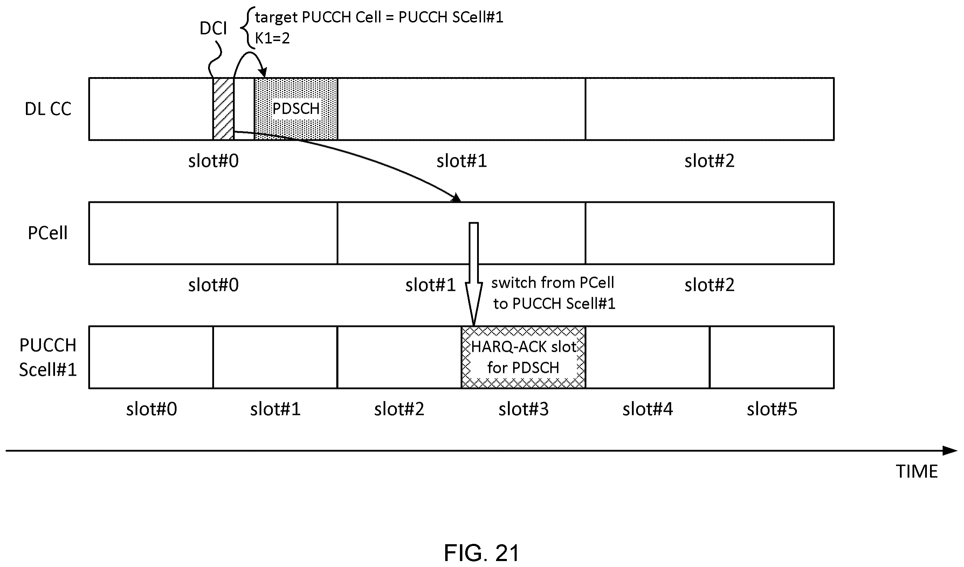

FIG. 21 is a diagram to show an example of PUCCH transmission according to Embodiment 3-2. In the example shown in FIG. 21, DL CC (cell), PCell, and PUCCH SCell #1 are configured, and DCI and PDSCH are received in DL CC (cell).

In the example shown in FIG. 21, DCI includes a field indicating the timing of HARQ-ACK feedback and a PUCCH cell indicator field. The field indicating the timing of HARQ-ACK feedback indicates K1 = 2, and the PUCCH cell indicator field indicates PUCCH SCell #1 as the target cell.

In this case, the UE determines that the slot two slots after the slot in which a PDSCH was received (slot #3) in PUCCH SCell #1 is a slot to transmit HARQ-ACK for the PDSCH. The UE switches the slot for transmitting the PUCCH from PCell to PUCCH SCell #1.

In Option 3-2-1, the UE transmits a PUCCH in PUCCH SCell #1 according to the configuration in a cell (i.e., DL CC) in which the PDSCH is transmitted.

### [Option 3-2-2]

The UE may transmit a PUCCH according to the configuration in a cell/CC/BWP/cell group (triggering cell/CC/BWP/cell group) in which DCI is transmitted.

In the example shown in FIG. 21, in Option 3-2-2, the UE transmits a PUCCH in PUCCH SCell #1 according to the configuration in a cell (i.e., DL CC) in which DCI is transmitted.

### [Option 3-2-3]

The UE may transmit a PUCCH according to the configuration in a cell/CC/BWP/cell group (triggered cell/CC/BWP/cell group) in which the PUCCH is triggered.

In the example shown in FIG. 21, in Option 3-2-3, the UE transmits a PUCCH in PUCCH SCell #1 according to the configuration in a cell (i.e., PCell) in which the PUCCH is triggered.

### [Option 3-2-4]

The UE may transmit a PUCCH according to the configuration in a cell/CC/BWP/cell group in which the PUCCH is (actually) transmitted.

In the example shown in FIG. 21, in Option 3-2-4, the UE transmits a PUCCH in PUCCH SCell #1 according to the configuration in a cell (i.e., PUCCH SCell) in which the PUCCH is transmitted.

Note that, although the above Options have been described by way of example of PUCCH cell switching scheme 1, they can also be applied to PUCCH cell switching scheme 2 as appropriate.

According to Embodiment 3-2, even when PUCCH cell switching is performed, PUCCH transmission can be performed appropriately.

According to the third embodiment as described above, it is possible to appropriately perform operations for STxMP PUCCH using an SFN.

### <Supplement>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information (for example. STxMP for PUSCH/PUCCH) for at least one of the above embodiments;
- supporting STxMP PUSCH SDM;
- supporting STxMP PUSCH SFN;
- supporting STxMP PUCCH SFN;
- supporting PUCCH cell switching;
- the number of panels available for simultaneous transmission that are supported.

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that STxMP PUSCH SDM/STxMP PUSCH SFN/STxMP PUCCH SFN is activated, any RRC parameter for a specific release (for example, Rel. 18/19), or the like.

When not supporting at least one of the specific UE capabilities or not configured with the specific information, the UE may apply operation of Rel. 15/16, for example.

### (Supplementary Notes A)

Regarding one embodiment of the present disclosure, the following supplementary notes of the invention will be given.

### {Supplementary Note A-1}

A terminal including:
a receiving section that receives downlink control information (DCI) for scheduling a physical uplink shared channel (PUSCH); and
a control section that determines, based on a specific field included in the DCI, whether the PUSCH is a plurality of PUSCHs to be transmitted in at least a same time domain subjected to space division multiplexing or a PUSCH for a single transmission/reception point.

### {Supplementary Note A-2}

The terminal according to supplementary note A-1, wherein, when a codepoint of the specific field indicates a first value, the control section determines that the PUSCH is a PUSCH for a transmission/reception point corresponding to a first sounding reference signal (SRS) resource set, and when the codepoint of the specific field indicates a second value, the control section determines that the PUSCH is a PUSCH for a transmission/reception point corresponding to a second SRS resource set.

### {Supplementary Note A-3}

The terminal according to supplementary note A-1 or supplementary note A-2, wherein, when a codepoint of the specific field indicates a third value or a fourth value, the control section determines that the PUSCH is a PUSCH to be transmitted in at least the same time domain subjected to space division multiplexing.

### {Supplementary Note A-4}

The terminal according to any one of supplementary note A-1 to supplementary note A-3, wherein the control section determines a number of layers associated with a first sounding reference signal (SRS) resource set, based on a first Transmitted Precoding Matrix Indicator (TPMI) field or a first SRS Resource Indicator (SRI) field, and determines a number of layers associated with a second SRS resource set, based on a second TPMI field or a second SRI field.

### (Supplementary Notes B)

Regarding one embodiment of the present disclosure, the following supplementary notes of the invention will be given.

### {Supplementary Note B-1}

A terminal including:
a receiving section that receives downlink control information (DCI) for scheduling a physical uplink shared channel (PUSCH); and
a control section that determines, based on a specific field included in the DCI, whether the PUSCH is a plurality of PUSCHs to be transmitted in at least a same time domain using a single frequency network (SFN) or a PUSCH for a single transmission/reception point.

### {Supplementary Note B-2}

The terminal according to supplementary note B-1, wherein, when a codepoint of the specific field indicates a first value, the control section determines that the PUSCH is a PUSCH for a transmission/reception point corresponding to a first sounding reference signal (SRS) resource set, and when the codepoint of the specific field indicates a second value, the control section determines that the PUSCH is a PUSCH for a transmission/reception point corresponding to a second SRS resource set.

### {Supplementary Note B-3}

The terminal according to supplementary note B-1 or supplementary note B-2, wherein, when a codepoint of the specific field indicates a third value, the control section determines that the PUSCH is a plurality of PUSCHs to be transmitted in at least the same time domain using the SFN.

### {Supplementary Note B-4}

The terminal according to any one of supplementary note B-1 to supplementary note B-3, wherein the control section assumes that a fourth value is not used for a codepoint of the specific field.

### (Supplementary Notes C)

Regarding one embodiment of the present disclosure, the following supplementary notes of the invention will be given.

### {Supplementary Note C-1}

A terminal including:
a receiving section that receives configuration of a physical uplink control channel (PUCCH) resource associated with one or more joint or uplink (UL) Transmission Configuration Indication (TCI) states, and receives downlink control information (DCI) including a PUCCH resource indicator (PRI) field; and
a control section that determines, based on a number of joint or UL TCI states associated with the PUCCH resource indicated using the PRI field, whether the PUCCH of the indicated PUCCH resource is a plurality of PUCCHs to be transmitted in at least a same time domain using a single frequency network (SFN).

### {Supplementary Note C-2}

The terminal according to supplementary note C-1, wherein, when the number of joint or UL TCI states associated with the indicated PUCCH resource is multiple, the control section determines that a PUCCH of the indicated PUCCH resource is a plurality of PUCCHs to be transmitted in at least the same time domain using the SFN.

### {Supplementary Note C-3}

The terminal according to supplementary note C-1 or supplementary note C-2, wherein
the receiving section further receives, using higher layer signaling, configuration related to PUCCH repetition subjected to time division multiplexing or a PUCCH using the SFN, and
when the number of joint or UL TCI states associated with the indicated PUCCH resource is multiple, the control section further determines, based on the configuration, whether the PUCCH of the indicated PUCCH resource is a plurality of PUCCHs to be transmitted in at least the same time domain using the SFN or the PUCCH repetition subjected to time division multiplexing.

### {Supplementary Note C-4}

The terminal according to any one of supplementary note C-1 to supplementary note C-3, wherein
the receiving section further receives information related to a number of PUCCH repetitions, and
when the number of joint or UL TCI states associated with the indicated PUCCH resource is multiple, the control section further determines, based on the information, whether the PUCCH of the indicated PUCCH resource is a plurality of PUCCHs to be transmitted in at least the same time domain using the SFN or the PUCCH repetition subjected to time division multiplexing.

### (Supplementary Notes D)

Regarding one embodiment of the present disclosure, the following supplementary notes of the invention will be given.

### {Supplementary Note D-1}

A terminal including:
a receiving section that receives configuration related to a physical uplink control channel (PUCCH) for each cell, and receives downlink control information (DCI) for scheduling a physical downlink shared channel (PDSCH); and
a control section that determines, based on configuration related to a PUCCH of a specific cell, a PUCCH for transmitting a Hybrid Automatic Repeat reQuest ACKnowledgement (HARQ-ACK) corresponding to the PDSCH, wherein
the configuration related to the PUCCH for each cell is configuration for one of: a plurality of PUCCHs to be transmitted in at least a same time domain using a single frequency network (SFN), PUCCH repetition subjected to time division multiplexing, PUCCH repetition subjected to time division multiplexing based on single DCI, and a PUCCH for a single transmission/reception point.

### {Supplementary Note D-2}

The terminal according to supplementary note D-1, wherein the control section determines, based on the configuration related to a PUCCH in a cell that receives the PDSCH, a PUCCH for transmitting the HARQ-ACK.

### {Supplementary Note D-3}

The terminal according to supplementary note D-1 or supplementary note D-2, wherein the control section determines, based on the configuration related to a PUCCH in a cell that receives the DCI, a PUCCH for transmitting the HARQ-ACK.

### {Supplementary Note D-4}

The terminal according to any one of supplementary note D-1 to supplementary note D-3, wherein the control section determines, based on the configuration related to a PUCCH in a cell that transmits the HARQ-ACK, a PUCCH for transmitting the HARQ-ACK.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

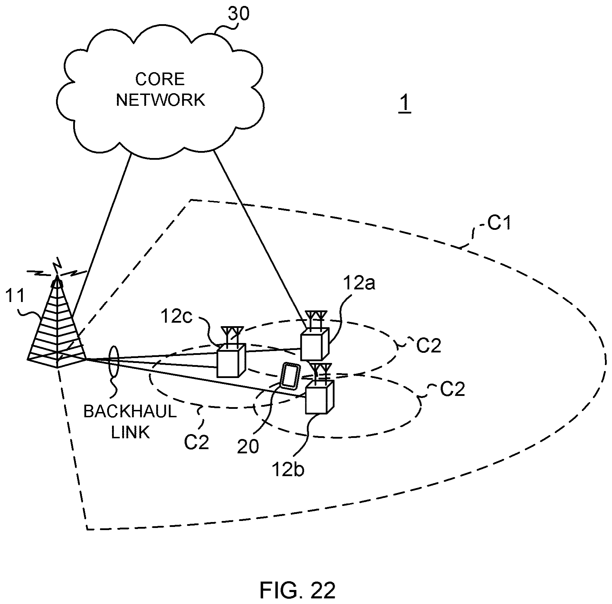

FIG. 22 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

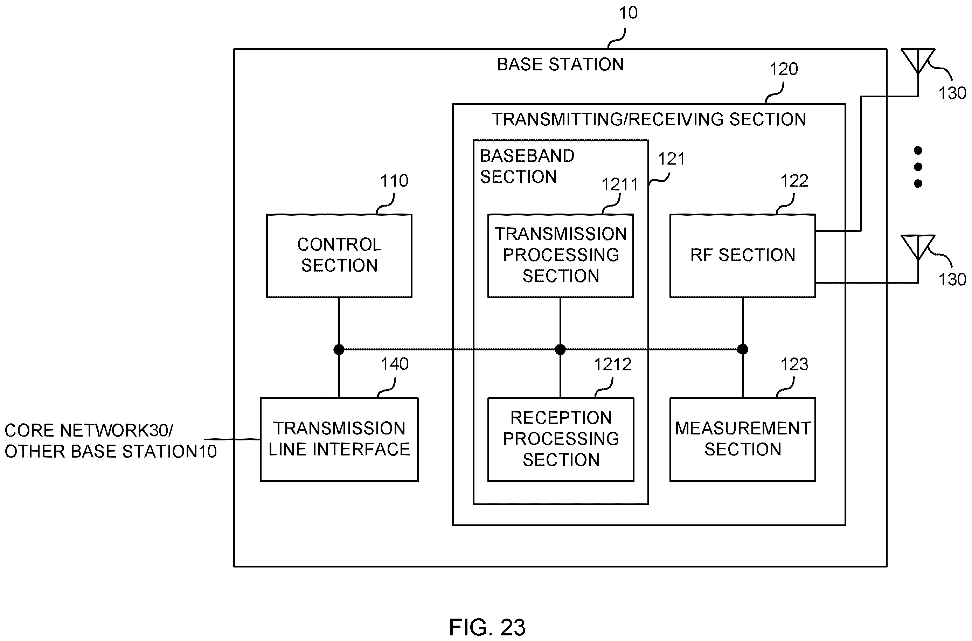

FIG. 23 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit downlink control information (DCI) for scheduling a physical uplink shared channel (PUSCH). The control section 110 may indicate, by using a specific field included in the DCI, whether the PUSCH is a plurality of PUSCHs to be transmitted in at least the same time domain subjected to space division multiplexing or a PUSCH for a single transmission/reception point (first embodiment).

The transmitting/receiving section 120 may transmit downlink control information (DCI) for scheduling a physical uplink shared channel (PUSCH). The control section 110 may indicate, by using a specific field included in the DCI, whether the PUSCH is a plurality of PUSCHs to be transmitted in at least the same time domain using a single frequency network (SFN) or a PUSCH for a single transmission/reception point (second embodiment).

The transmitting/receiving section 120 may transmit configuration of a physical uplink control channel (PUCCH) resource associated with one or more joint or uplink (UL) Transmission Configuration Indication (TCI) states, and transmit downlink control information (DCI) including a PUCCH resource indicator (PRI) field. The control section 110 may indicate, based on the number of joint or UL TCI states associated with the PUCCH resource indicated using the PRI field, whether the PUCCH of the indicated PUCCH resource is a plurality of PUCCHs to be transmitted in at least the same time domain using a single frequency network (SFN) (third embodiment).

The transmitting/receiving section 120 may transmit configuration related to a physical uplink control channel (PUCCH) for each cell, and transmit downlink control information (DCI) for scheduling a physical uplink shared channel (PDSCH). The control section 110 may indicate, by using configuration related to a PUCCH of a specific cell, a PUCCH for transmitting a Hybrid Automatic Repeat reQuest ACKnowledgement (HARQ-ACK) corresponding to the PDSCH. The configuration related to the PUCCH for each cell may be configuration for one of: a plurality of PUCCHs to be transmitted in at least the same time domain using a single frequency network (SFN), PUCCH repetition subjected to time division multiplexing, PUCCH repetition subjected to time division multiplexing based on single DCI, and a PUCCH for a single transmission/reception point (third embodiment).

### (User Terminal)

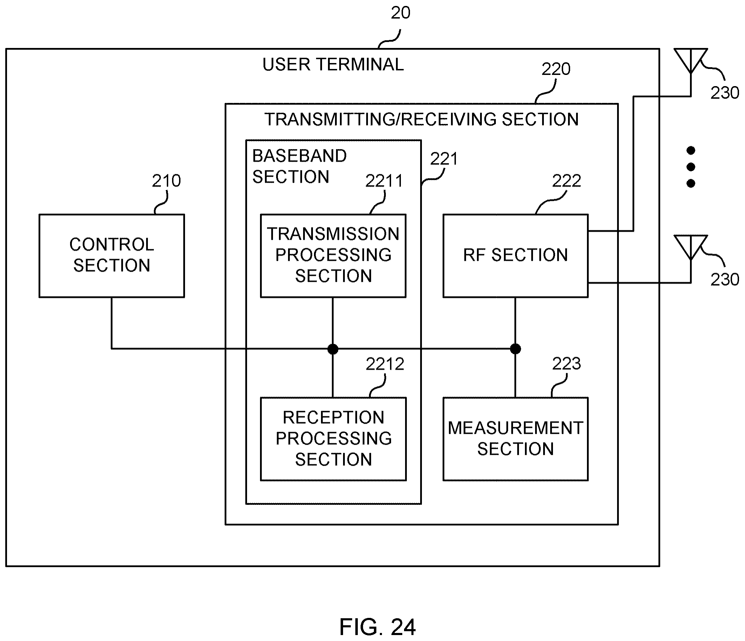

FIG. 24 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information (DCI) for scheduling a physical uplink shared channel (PUSCH). The control section 210 may determine, based on a specific field included in the DCI, whether the PUSCH is a plurality of PUSCHs to be transmitted in at least the same time domain subjected to space division multiplexing or a PUSCH for a single transmission/reception point (first embodiment).

When a codepoint of the specific field indicates a first value, the control section 210 may determine that the PUSCH is a PUSCH for a transmission/reception point corresponding to a first sounding reference signal (SRS) resource set, and when the codepoint of the specific field indicates a second value, the control section 210 may determine that the PUSCH is a PUSCH for a transmission/reception point corresponding to a second SRS resource set (first embodiment).

When a codepoint of the specific field indicates a third value or a fourth value, the control section 210 may determine that the PUSCH is a PUSCH to be transmitted in at least the same time domain subjected to space division multiplexing (first embodiment).

The control section 210 may determine a number of layers associated with a first sounding reference signal (SRS) resource set, based on a first Transmitted Precoding Matrix Indicator (TPMI) field or a first SRS Resource Indicator (SRI) field, and determine a number of layers associated with a second SRS resource set, based on a second TPMI field or a second SRI field (first embodiment).

The transmitting/receiving section 220 may receive downlink control information (DCI) for scheduling a physical uplink shared channel (PUSCH). The control section 210 may determine, based on a specific field included in the DCI, whether the PUSCH is a plurality of PUSCHs to be transmitted in at least the same time domain using a single frequency network (SFN) or a PUSCH for a single transmission/reception point (second embodiment).

When a codepoint of the specific field indicates a first value, the control section 210 may determine that the PUSCH is a PUSCH for a transmission/reception point corresponding to a first sounding reference signal (SRS) resource set, and when the codepoint of the specific field indicates a second value, the control section 210 may determine that the PUSCH is a PUSCH for a transmission/reception point corresponding to a second SRS resource set (second embodiment).

When a codepoint of the specific field indicates a third value, the control section 210 may determine that the PUSCH is a plurality of PUSCHs to be transmitted in at least the same time domain using the SFN (second embodiment).

The control section 210 may assume that a fourth value is not used for a codepoint of the specific field (second embodiment).

The transmitting/receiving section 220 may receive configuration of a physical uplink control channel (PUCCH) resource associated with one or more joint or uplink (UL) Transmission Configuration Indication (TCI) states, and receive downlink control information (DCI) including a PUCCH resource indicator (PRI) field. The control section 220 may determine, based on the number of joint or UL TCI states associated with the PUCCH resource indicated using the PRI field, whether the PUCCH of the indicated PUCCH resource is a plurality of PUCCHs to be transmitted in at least the same time domain using a single frequency network (SFN) (third embodiment).

When the number of joint or UL TCI states associated with the indicated PUCCH resource is multiple, the control section 210 may determine that the PUCCH of the indicated PUCCH resource is a plurality of PUCCHs to be transmitted in at least the same time domain using the SFN (third embodiment).

The transmitting/receiving section 221 may further receive, using higher layer signaling, configuration related to PUCCH repetition subjected to time division multiplexing or a PUCCH using the SFN, When the number of joint or UL TCI states associated with the indicated PUCCH resource is multiple, the control section 210 may further determine, based on the configuration, whether the PUCCH of the indicated PUCCH resource is a plurality of PUCCHs to be transmitted in at least the same time domain using the SFN or the PUCCH repetition subjected to time division multiplexing (third embodiment).

The transmitting/receiving section 220 may further receive information related to the number of PUCCH repetitions. When the number of joint or UL TCI states associated with the indicated PUCCH resource is multiple, the control section 210 may further determine, based on the information, whether the PUCCH of the indicated PUCCH resource is a plurality of PUCCHs to be transmitted in at least the same time domain using the SFN or the PUCCH repetition subjected to time division multiplexing (third embodiment).

The transmitting/receiving section 220 may receive configuration related to a physical uplink control channel (PUCCH) for each cell, and receive downlink control information (DCI) for scheduling a physical uplink shared channel (PDSCH). The control section 210 may determine, based on configuration related to a PUCCH of a specific cell, a PUCCH for transmitting a Hybrid Automatic Repeat reQuest ACKnowledgement (HARQ-ACK) corresponding to the PDSCH. The configuration related to the PUCCH for each cell may be configuration for one of: a plurality of PUCCHs to be transmitted in at least the same time domain using a single frequency network (SFN), PUCCH repetition subjected to time division multiplexing, PUCCH repetition subjected to time division multiplexing based on single DCI, and a PUCCH for a single transmission/reception point (third embodiment).

The control section 210 may determine, based on the configuration related to a PUCCH in a cell that receives the PDSCH, a PUCCH for transmitting the HARQ-ACK.

The control section 210 may determine, based on the configuration related to a PUCCH in a cell that receives the DCI a PUCCH for transmitting the HARQ-ACK.

The control section 210 may determine, based on the configuration related to a PUCCH in a cell that transmits the HARQ-ACK, a PUCCH for transmitting the HARQ-ACK.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

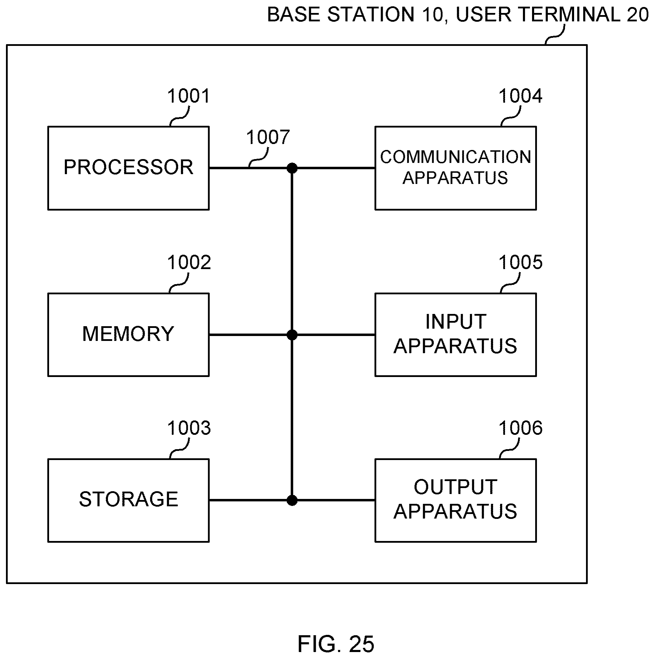

For example, a base station, a user terminal, and so on according to one embodiment of the present disclosure may function as a computer that executes the processes of the radio communication method of the present disclosure. FIG. 25 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

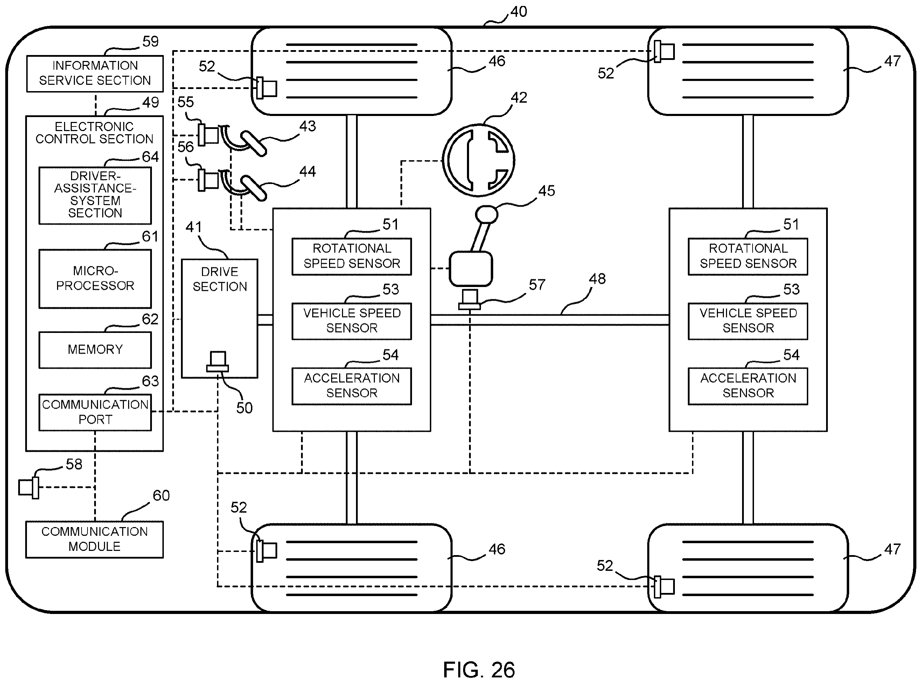

FIG. 26 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives downlink control information (DCI) for scheduling a physical uplink shared channel (PUSCH); and
a control section that determines, based on a specific field included in the DCI, whether the PUSCH is a plurality of PUSCHs to be transmitted in at least a same time domain subjected to space division multiplexing or a PUSCH for a single transmission/reception point.

2. The terminal according to claim 1, wherein
when a codepoint of the specific field indicates a first value, the control section determines that the PUSCH is a PUSCH for a transmission/reception point corresponding to a first sounding reference signal (SRS) resource set, and when the codepoint of the specific field indicates a second value, the control section determines that the PUSCH is a PUSCH for a transmission/reception point corresponding to a second SRS resource set.

3. The terminal according to claim 1, wherein
when a codepoint of the specific field indicates a third value or a fourth value, the control section determines that the PUSCH is a PUSCH to be transmitted in at least the same time domain subjected to space division multiplexing.

4. The terminal according to claim 1, wherein
the control section determines a number of layers associated with a first sounding reference signal (SRS) resource set, based on a first Transmitted Precoding Matrix Indicator (TPMI) field or a first SRS Resource Indicator (SRI) field, and determines a number of layers associated with a second SRS resource set, based on a second TPMI field or a second SRI field.

5. A radio communication method for a terminal, comprising:
receiving downlink control information (DCI) for scheduling a physical uplink shared channel (PUSCH); and
determining, based on a specific field included in the DCI, whether the PUSCH is a plurality of PUSCHs to be transmitted in at least a same time domain subjected to space division multiplexing or a PUSCH for a single transmission/reception point.

6. A base station comprising:
a transmitting section that transmits downlink control information (DCI) for scheduling a physical uplink shared channel (PUSCH); and
a control section that indicates, by using a specific field included in the DCI, whether the PUSCH is a plurality of PUSCHs to be transmitted in at least a same time domain subjected to space division multiplexing or a PUSCH for a single transmission/reception point.
